# EUROPEAN PATENT APPLICATION

(11) **EP 4 734 474 A1**
(43) Date of publication of application: **29.04.2026**
(21) Application number: 25210957.4
(22) Date of filing: 24.10.2025
(51) Int. Cl.: H04L 47/2416, H04L 47/2475, H04L 47/25, H04L 47/263, H04W 28/02

(54) **ADJUSTING ONE OR MORE APPLICATION FLOWS OR USER CONNECTION**

(30) Priority: 25.10.2024 FI 20246273
(71) Applicant: Nokia Solutions and Networks Oy, 02610 Espoo (FI)
(72) Inventor: SILLANPAA, Anna, Jarvenpää (FI); ILLAHI, Gazi Karam, Espoo (FI)
(74) Representative: Nokia EPO representatives

(57) **Abstract**

Disclosed is a method comprising receiving a message comprising information related to a communication link between a network node and a user equipment, wherein the message further comprises at least a part of an application correlation identifier indicating at least one of: one or more application flows served to the user equipment via the network node, or a user connection used for delivering the one or more application flows to the user equipment via the network node; correlating the one or more application flows or the user connection to the information related to the communication link, based at least on the application correlation identifier; and performing one or more actions for adjusting the one or more application flows or the user connection, based on the information correlated to the one or more application flows or to the user connection.

## Description

### FIELD

The following example embodiments relate to wireless communication.

### BACKGROUND

In high load situations, a radio network may not be able to support applications that require a high bit rate and low latency.

### SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided an apparatus comprising: means for receiving a message comprising information related to a communication link between a network node and a user equipment, wherein the message further comprises at least a part of an application correlation identifier indicating at least one of: one or more application flows served to the user equipment via the network node, or a user connection used for delivering the one or more application flows to the user equipment via the network node; means for correlating the one or more application flows or the user connection to the information related to the communication link, based at least on the application correlation identifier; and means for performing one or more actions for adjusting the one or more application flows or the user connection, based on the information correlated to the one or more application flows or to the user connection.

According to a second aspect, there is provided the apparatus of the first aspect, wherein the information related to the communication link comprises network resource use information indicating an available capacity of the communication link between the network node and the user equipment, wherein the one or more actions comprise adjusting a bit rate of the one or more application flows based on the available capacity of the communication link, wherein the adjustment of the bit rate comprises: reducing the bit rate of the one or more application flows, based on the network resource use information indicating that the available capacity is below a first threshold; or increasing the bit rate of the one or more application flows, based on the network resource use information indicating that the available capacity is above a second threshold.

According to a third aspect, there is provided the apparatus of the second aspect, wherein the network resource use information indicates at least one of: network resources used by the user equipment, or network resources predicted to be used by the user equipment.

According to a fourth aspect, there is provided the apparatus of any of the first to thirds aspects, wherein the information related to the communication link comprises connection quality information associated with at least one of: the user connection, a radio network bearer associated with the one more application flows, or a mobile network bearer associated with the one more application flows.

According to a fifth aspect, there is provided the apparatus of any of the first to fourth aspects, wherein the information related to the communication link comprises location information indicating at least one of: a location of the network node, or a location of the user equipment.

According to a sixth aspect, there is provided the apparatus of any of the first to fifth aspects, wherein the one or more actions comprise terminating at least one of: the user connection, the one or more application flows, a radio network bearer associated with the one or more application flows, or a mobile network bearer associated with the one or more application flows.

According to a seventh aspect, there is provided the apparatus of any of the first to sixth aspects, wherein the one or more actions comprise transmitting, to an application server or to a core network function or to the user equipment, one or more transmissions comprising an alert or information for indicating a need to establish, terminate or adjust at least one of: the user connection, the one or more application flows, a radio network bearer associated with the one or more application flows, or a mobile network bearer associated with the one or more application flows.

According to an eighth aspect, there is provided the apparatus of any of the first to seventh aspects, wherein the one or more actions comprise changing one or more quality of service requirements or a priority level associated with the one or more application flows or the user connection.

According to a ninth aspect, there is provided the apparatus of any of the first to eighth aspects, further comprising means for transmitting, to a core network function, an indication indicating the one or more actions performed for adjusting the one or more application flows or the user connection.

According to a tenth aspect, there is provided the apparatus of any of the first to ninth aspects, wherein the application correlation identifier comprises: an application identifier for identifying an application associated with the one or more application flows, and an application correlation instance for identifying an instance of the application.

According to an eleventh aspect, there is provided the apparatus of the tenth aspect, wherein the message comprises the application identifier and the application correlation instance; or wherein the message comprises the application identifier, and wherein the apparatus is caused to receive the application correlation instance in another message; or wherein the message comprises the application correlation instance, and wherein the apparatus is caused to receive the application identifier in another message.

According to a twelfth aspect, there is provided the apparatus of any of the first to eleventh aspects, wherein the message further comprises at least one of: a user identifier of a subscribed user of the user equipment, an identifier of the user equipment, an internet protocol address allocated to the user equipment, a port number associated with the user equipment, an identifier of one or more data radio bearers carrying the one or more application flows, an identifier of at least a subset of a quality of service flow associated with the one or more application flows, an identifier of one or more protocol data unit sets associated with the one or more application flows, or an identifier of an entity or a network that allocated the application correlation identifier, wherein the correlation is based further on the at least one of: the user identifier, the identifier of the user equipment, the internet protocol address allocated to the user equipment, or the port number associated with the user equipment, the identifier of the one or more data radio bearers, the identifier of at least the subset of the quality of service flow, the identifier of the one or more protocol data unit sets, or the identifier of the entity or the network that allocated the application correlation identifier.

According to a thirteenth aspect, there is provided the apparatus of any of the first to twelfth aspects, further comprising: means for allocating the application correlation identifier and transmit the application correlation identifier to a core network function, prior to receiving the message comprising the information related to the communication link; or means for receiving the application correlation identifier from a core network function that allocated the application correlation identifier, prior to receiving the message comprising the information related to the communication link.

According to a fourteenth aspect, there is provided the apparatus of any of the first to thirteenth aspects, further comprising: means for detecting a need for adjusting the one or more application flows; and means for transmitting, to a core network function, based on the detection, a request for the information related to the communication link between the network node and the user equipment, wherein the request comprises the application correlation identifier, wherein the information related to the communication link is received based on transmitting the request.

According to a fifteenth aspect, there is provided the apparatus of any of the first to thirteenth aspects, further comprising: means for determining a bandwidth required by the one or more application flows; and means for transmitting, to a core network function, a request for the bandwidth required by the one or more application flows, wherein the request comprises the application correlation identifier, wherein the information related to the communication link is received based on transmitting the request, the information indicating that the bandwidth required by the one or more application flows is available.

According to a sixteenth aspect, there is provided the apparatus of any of the fourteenth to fifteenth aspects, wherein the request further comprises at least one of: a user identifier of a subscribed user of the user equipment, an identifier of the user equipment, a public land mobile network identifier, an operator network identifier, an internet protocol address allocated to the user equipment, a port number associated with the user equipment, an internet protocol address of an application associated with the one or more application flows, a port number of the application associated with the one or more application flows, an application type identifier of the application associated with the one or more application flows, an application server identifier of an application server serving the one or more application flows, or a report type identifier for identifying a requested type of reporting.

According to a seventeenth aspect, there is provided the apparatus of any of the first to sixteenth aspects, further comprising: means for detecting a termination of at least one of: the one or more application flows, or a quality of service flow associated with the one or more application flows; means for determining whether the one or more application flows or the quality of service flow have been re-established within a pre-defined time period after detecting the termination; and means for removing the application correlation identifier, based on determining that the one or more application flows or the quality of service flow have not been re-established within the pre-defined time period.

According to an eighteenth aspect, there is provided the apparatus of any of the first to seventeenth aspects, further comprising: means for receiving an additional message comprising information related to a communication link between a target network node and the user equipment after a handover of the user equipment or after a re-establishment of the user connection from the network node to the target network node, wherein the additional message further comprises at least a part of the application correlation identifier or at least a part of an updated application correlation identifier; means for correlating the one or more application flows to the information related to the communication link between the target network node and the user equipment, based at least on the application correlation identifier or the updated application correlation identifier comprised in the additional message; and means for performing one or more actions for adjusting the one or more application flows, based on the information related to the communication link between the target network node and the user equipment.

According to a nineteenth aspect, there is provided an apparatus comprising: means for generating a message comprising information related to a communication link between a network node and a user equipment, wherein the message further comprises at least a part of an application correlation identifier indicating at least one of: one or more application flows served by an application server to the user equipment via the network node, or a user connection used for delivering the one or more application flows to the user equipment via the network node; and means for transmitting the message to the application server serving the one or more application flows.

According to a twentieth aspect, there is provided the apparatus of the nineteenth aspect, wherein the message further comprises an indication indicating whether the application server is allowed to adjust the one or more application flows or the user connection based on the information related to the communication link.

According to a twenty-first aspect, there is provided the apparatus of the nineteenth or twentieth aspect, wherein the part of the application correlation identifier identifies the application server, wherein the apparatus further comprises: means for detecting a change of the application server to a new application server, wherein the new application server is serving the one or more application flows to the user equipment after the change; and means for updating the part of the application correlation identifier to identify the new application server, based on detecting the change of the application server.

According to a twenty-second aspect, there is provided the apparatus of any of the nineteenth to twenty-first aspects, further comprising: means for transmitting, to a core network function, a subscription request for subscribing to an application correlation service; and means for receiving, from the core network function, an acknowledgement to the subscription request, wherein the acknowledgement comprises at least the part of the application correlation identifier.

According to a twenty-third aspect, there is provided a method comprising: receiving a message comprising information related to a communication link between a network node and a user equipment, wherein the message further comprises at least a part of an application correlation identifier indicating at least one of: one or more application flows served to the user equipment via the network node, or a user connection used for delivering the one or more application flows to the user equipment via the network node; correlating the one or more application flows or the user connection to the information related to the communication link, based at least on the application correlation identifier; and performing one or more actions for adjusting the one or more application flows or the user connection, based on the information correlated to the one or more application flows or to the user connection.

According to a twenty-fourth aspect, there is provided a method comprising: generating a message comprising information related to a communication link between a network node and a user equipment, wherein the message further comprises at least a part of an application correlation identifier indicating at least one of: one or more application flows served by an application server to the user equipment via the network node, or a user connection used for delivering the one or more application flows to the user equipment via the network node; and transmitting the message to the application server serving the one or more application flows.

According to a twenty-fifth aspect, there is provided a computer program comprising instructions which, when executed by an apparatus, cause the apparatus to perform at least the following: receiving a message comprising information related to a communication link between a network node and a user equipment, wherein the message further comprises at least a part of an application correlation identifier indicating at least one of: one or more application flows served to the user equipment via the network node, or a user connection used for delivering the one or more application flows to the user equipment via the network node; correlating the one or more application flows or the user connection to the information related to the communication link, based at least on the application correlation identifier; and performing one or more actions for adjusting the one or more application flows or the user connection, based on the information correlated to the one or more application flows or to the user connection.

According to a twenty-sixth aspect, there is provided a computer program comprising instructions which, when executed by an apparatus, cause the apparatus to perform at least the following: generating a message comprising information related to a communication link between a network node and a user equipment, wherein the message further comprises at least a part of an application correlation identifier indicating at least one of: one or more application flows served by an application server to the user equipment via the network node, or a user connection used for delivering the one or more application flows to the user equipment via the network node; and transmitting the message to the application server serving the one or more application flows.

According to a twenty-seventh aspect, there is provided a system comprising at least a network entity and an application server; wherein the network entity comprises: means for generating a message comprising information related to a communication link between a network node and a user equipment, wherein the message further comprises at least a part of an application correlation identifier indicating at least one of: one or more application flows served by the application server to the user equipment via the network node, or a user connection used for delivering the one or more application flows to the user equipment via the network node; and means for transmitting the message to the application server serving the one or more application flows; wherein the application server comprises: means for receiving the message; means for correlating the one or more application flows or the user connection to the information related to the communication link, based at least on the application correlation identifier; and means for performing one or more actions for adjusting the one or more application flows or the user connection, based on the information correlated to the one or more application flows or to the user connection.

According to a twenty-eighth aspect, there is provided a system comprising at least a network entity and an application server; wherein the network entity is configured to: generate a message comprising information related to a communication link between a network node and a user equipment, wherein the message further comprises at least a part of an application correlation identifier indicating at least one of: one or more application flows served by the application server to the user equipment via the network node, or a user connection used for delivering the one or more application flows to the user equipment via the network node; and transmit the message to the application server serving the one or more application flows; wherein the application server is configured to: receive the message; correlate the one or more application flows or the user connection to the information related to the communication link, based at least on the application correlation identifier; and perform one or more actions for adjusting the one or more application flows or the user connection, based on the information correlated to the one or more application flows or to the user connection.

According to a twenty-ninth aspect, there is provided a non-transitory computer readable medium comprising program instructions which, when executed by an apparatus, cause the apparatus to perform at least the following: receiving a message comprising information related to a communication link between a network node and a user equipment, wherein the message further comprises at least a part of an application correlation identifier indicating at least one of: one or more application flows served to the user equipment via the network node, or a user connection used for delivering the one or more application flows to the user equipment via the network node; correlating the one or more application flows or the user connection to the information related to the communication link, based at least on the application correlation identifier; and performing one or more actions for adjusting the one or more application flows or the user connection, based on the information correlated to the one or more application flows or to the user connection.

According to a thirtieth aspect, there is provided a computer readable medium comprising program instructions which, when executed by an apparatus, cause the apparatus to perform at least the following: receiving a message comprising information related to a communication link between a network node and a user equipment, wherein the message further comprises at least a part of an application correlation identifier indicating at least one of: one or more application flows served to the user equipment via the network node, or a user connection used for delivering the one or more application flows to the user equipment via the network node; correlating the one or more application flows or the user connection to the information related to the communication link, based at least on the application correlation identifier; and performing one or more actions for adjusting the one or more application flows or the user connection, based on the information correlated to the one or more application flows or to the user connection.

According to a thirty-first aspect, there is provided a non-transitory computer readable medium comprising program instructions which, when executed by an apparatus, cause the apparatus to perform at least the following: generating a message comprising information related to a communication link between a network node and a user equipment, wherein the message further comprises at least a part of an application correlation identifier indicating at least one of: one or more application flows served by an application server to the user equipment via the network node, or a user connection used for delivering the one or more application flows to the user equipment via the network node; and transmitting the message to the application server serving the one or more application flows.

According to a thirty-second aspect, there is provided a computer readable medium comprising program instructions which, when executed by an apparatus, cause the apparatus to perform at least the following: generating a message comprising information related to a communication link between a network node and a user equipment, wherein the message further comprises at least a part of an application correlation identifier indicating at least one of: one or more application flows served by an application server to the user equipment via the network node, or a user connection used for delivering the one or more application flows to the user equipment via the network node; and transmitting the message to the application server serving the one or more application flows.

According to a thirty-third aspect, there is provided a non-transitory computer readable medium comprising at least one of a first set of program instructions or a second set of program instructions, wherein the first set of program instructions, when executed by an apparatus, cause the apparatus to perform at least the following: generating a message comprising information related to a communication link between a network node and a user equipment, wherein the message further comprises at least a part of an application correlation identifier indicating at least one of: one or more application flows served by an application server to the user equipment via the network node, or a user connection used for delivering the one or more application flows to the user equipment via the network node; and transmitting the message to the application server serving the one or more application flows, wherein the second set of program instructions, when executed by an apparatus, cause the apparatus to perform at least the following: receiving the message; correlating the one or more application flows or the user connection to the information related to the communication link, based at least on the application correlation identifier; and performing one or more actions for adjusting the one or more application flows or the user connection, based on the information correlated to the one or more application flows or to the user connection.

### BRIEF DESCRIPTION OF THE DRAWINGS

In the following, various example embodiments will be described in greater detail with reference to the accompanying drawings, in which
FIG. 1 illustrates an example of a wireless communication network;
FIG. 2 illustrates an example of a system;
FIG. 3 illustrates an example of a system;
FIG. 4 illustrates a block diagram;
FIG. 5 illustrates a signal flow diagram;
FIG. 6 illustrates a block diagram;
FIG. 7 illustrates a signal flow diagram;
FIG. 8 illustrates a signal flow diagram;
FIG. 9 illustrates a signal flow diagram;
FIG. 10 illustrates a flow chart;
FIG. 11 illustrates a flow chart;
FIG. 12 illustrates a flow chart;
FIG. 13 illustrates a flow chart;
FIG. 14 illustrates a flow chart;
FIG. 15 illustrates a flow chart;
FIG. 16 illustrates a flow chart;
FIG. 17 illustrates an example of an apparatus; and
FIG. 18 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

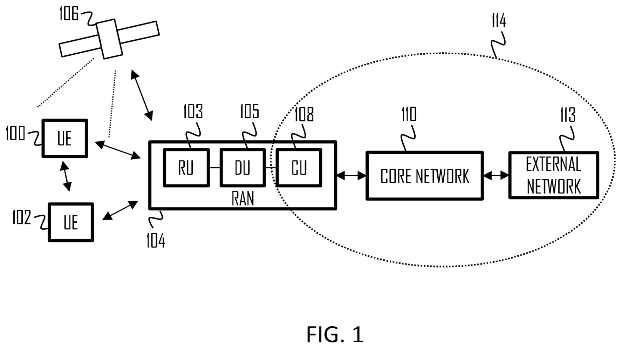

FIG. 1 depicts an example of a simplified wireless communication network (or mobile network) showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, a RAN node, or a network device.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and/or receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, or low earth orbit (LEO) satellite systems, such as mega-constellations (i.e., systems in which hundreds of (nano)satellites are deployed). Alternatively, the satellites may be an airborne devices, such as an unmanned aerial vehicle (UAV), or a high-altitude platform system (HAPS). A given satellite 106 may provide communication services on Earth via one or more satellite beams. The one or more satellite beams create one or more cells over a given service area that may be bounded by the field of view of the satellite 106.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds. To provide satisfactory quality of experience (QoE) for reliable communications, including extended reality (XR), 6G should be able to support very high data rates, for example ranging from 100 megabits per second (Mbps) to 10 gigabits per second (Gbps) or even higher. Another additional requirement is the low end-to-end latency (e.g., approximately 10 milliseconds).

In 5G, the core network 110 may classify downlink application flows and the non-access stratum (NAS) layer of the UE uplink application flows into QoS flows. The access node 104 (e.g., gNB) may define a radio bearer configuration for the UE 100, 102 and map QoS flows to data radio bearers (DRBs) based on the QoS profiles received from the core network 110. In other words, the core network 100 may classify application flows based on their QoS requirements, and the access node 104 may set up the necessary channels to ensure that the data is transmitted efficiently and with the required quality.

A data radio bearer (DRB) is a radio channel used in mobile networks to carry user data between the UE 100, 102 and the access node 104.

An application flow refers to the stream of data packets generated by a specific application or service as it communicates over the network. For example, when streaming a video or making a video call, the data being sent and received forms an application flow. Each application flow may have different requirements for speed, latency, and reliability, which are managed by the network to ensure a good user experience.

A downlink application flow refers to data transmitted from the network (e.g., from the access node 104) to the UE 100, 102. An uplink application flow refers to data transmitted from the UE 100, 102 to the network (e.g. to the access node 104).

QoS requirements are specific criteria that define the performance level needed for an application flow, such as minimum bandwidth, maximum latency, and reliability. QoS requirements ensure that different types of data traffic, such as video streaming or online gaming, receive the appropriate network resources to function smoothly.

A QoS profile is a set of parameters that define the specific QoS requirements for an application flow. These parameters may include, for example, bandwidth, latency, jitter, and packet loss.

A QoS flow is a data stream that is managed according to these QoS requirements. In other words, the QoS flow defines how the network manages the application flow, ensuring that it meets the specific QoS requirements. In essence, the application flow refers to the data being transmitted, and the QoS flow is the network's way of ensuring that the data is delivered with the necessary performance and reliability.

The packet core network may set up a dedicated or default QoS flow with a given 5G QoS identifier (5QI). TS 23.501 defines standardized non-guaranteed bit rate (non-GBR), guaranteed bit rate (GBR) and delay-critical non-GBR/GBR 5QI values and additionally operator-definable non-GBR and GBR 5QIs, with operator-configurable QoS characteristics.

5QI support is also needed in the core network 110 (in addition to the RAN). For example, the access and mobility management function (AMF), session management function (SMF), user plane function (UPF) and unified data management (UDM) or policy control function (PCF) in the packet core network need to support the 5QI. The UE 100, 102 also needs to support the 5QI.

The 5QI QoS flow may be mapped 1-to-1 to a DRB in 5G RAN. All traffic within the DRB may get the same QoS treatment (e.g., in scheduling), based on NR Release 15-17 products. However, other mappings are possible, for example 1-toN.

The core network may provide the QoS flow 5QI to the 5G RAN using the next generation application protocol (NGAP) for control plane signaling, and NAS or RRC signaling from the 5G RAN and the UE.

It should be noted that operator-definable 5QIs can be used instead of 3GPP-defined 5QIs. Operator-definable 5QIs may be non-GBR or GBR.

Network as a code application programming interfaces (APIs) can also be used to provide user-specific and application-specific requirements to the RAN. This can be done through 3GPP-defined techniques such as UE context, protocol data unit (PDU) session, and QoS flow management procedures, or through other means like the open radio access network (O-RAN) defined E2 near-real-time radio access network intelligent controller (RIC) or other interfaces.

NR Release 18 has additionally specified PDU set information, which can further identify "sub flows" within QoS Flows to be treated differently in terms of importance, packet delay budget, etc. This information can be communicated to the central unit user plane (CU-UP) and distributed unit (DU) via the N2 and N3 interfaces.

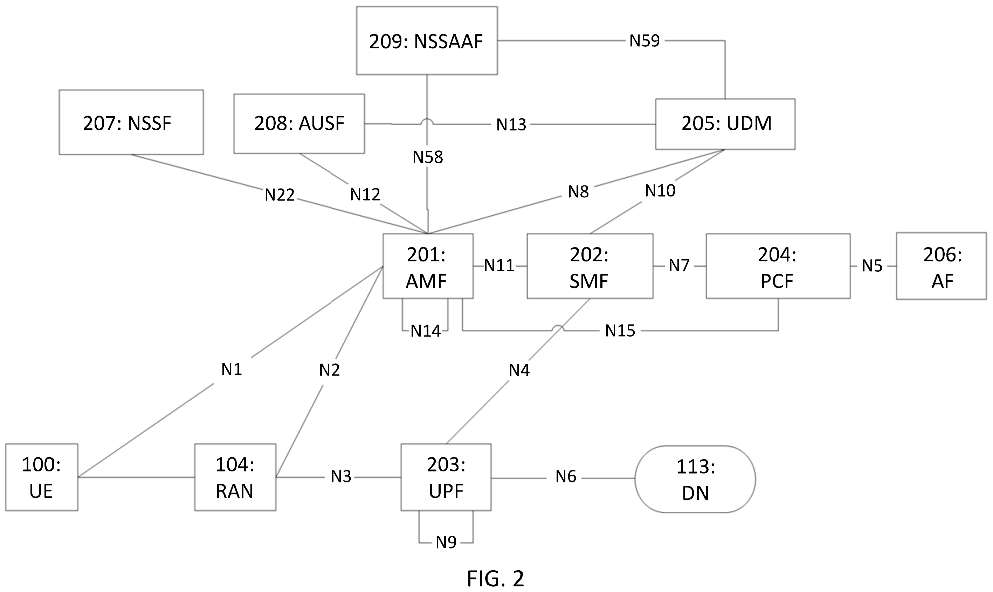

FIG. 2 illustrates an example of a system involved in managing QoS for application flows in a 5G network.

The system may comprise at least a UE 100, a RAN node (access node) 104, an application function (AF) 206, an access and mobility management function (AMF) 201, a session management function (SMF) 202, a user plane function (UPF) 203, and a unified data management (UDM) 205.

The system may further comprise at least one of: a policy control function (PCF) 204, a network slice selection function (NSSF) 207, an authentication server function (AUSF) 208, a network slice-specific authentication and authorization function (NSSAAF) 209, and a data network (DN) 113.

In the service-based architecture of 3GPP networks, the network can expose various available network functions, services and capabilities to (authorized) entities. These entities act as (network) service consumers. Such entities may provide application services to end users, acting as "application service providers". The application function 206 is a network function which may allow such entities (application service providers) to get information, control and provision network services for a particular application.

The AF 206 may be located in the core network 110 or outside of the core network 110 or even outside of the 3GPP network. For example, the AF 206 may be collocated physically with the RAN or UPF 203. The AF 206 interacts with the core network 110 in order to provide services, for example to support the following: application function influence on traffic routing; application function influence on service function chaining, accessing the network exposure function; interacting with the policy and charging control framework; time synchronization service; IP multimedia subsystem (IMS) interactions with the core network 110; and/or support PDU set handling.

Based on operator deployment, application functions considered to be trusted by the operator can be allowed to interact directly with relevant network functions. Application functions not allowed by the operator to access directly the network functions may use the external exposure framework via the network exposure function (NEF) to interact with relevant network functions (in case the AF 206 is located outside the 3GPP network).

The AMF 201 is a core network function that manages connections and mobility.

The SMF 202 is a core network function that manages sessions and QoS flows.

The UPF 203 is a core network function that handles data forwarding and QoS enforcement. The UDM 205 stores subscription data.

The PCF 204 is a core network function that manages policies and QoS rules.

The NSSF 207 is a core network function responsible for selecting the appropriate network slice for the UE 100 based on the subscription information and the requested service. Network slicing allows multiple virtual networks to be created on a shared physical infrastructure, each tailored to specific service requirements.

The AUSF 208 is a core network function that handles the authentication of the UE 100. The AUSF 208 verifies the identity of the user and ensures that only authorized users can access the network services.

The NSSAAF 209 is a core network function that provides authentication and authorization for network slices. The NSSAAF 209 ensures that the UE 100 is authorized to access a specific network slice and that the slice's resources are used appropriately.

The DN 113 refers to an external data network that the UE 100 can connect to through the core network 110. Some examples of the data network include the internet, private enterprise networks, or other service provider networks.

In FIG. 2, N1, N2, N3, N4, N5, N6, N7, N8, N9, N10, N11, N12, N13, N14, N15, N22, N58 and N59 refer to the interfaces between the various components or entities of the system.

Some options to provide QoS flow parameters, such as 5QI, are presented in the following.

Referring to FIG. 2, a UE 100 may request specific QoS parameters, such as 5QI, as part of the protocol data unit (PDU) session or QoS flow bearer establishment.

The UE's subscription data in the UDM 205 may provide default 5QI QoS flow per data network name (DNN) for the PDU session. This information may further be provided to the AMF 201 and/or SMF 202 and to the RAN node 104 for bearer management purposes.

The PCF 204 may provide 5QI QoS flow with or without interaction with the application function 206. Static configurations may use internet protocol (IP) addresses and port numbers and can be supported in the SMF 202 or UPF 203 or as a separate entity. Dynamic application information may be provided from application function 206 via the PCF 204, either directly as 5QI (bit rate etc. requirements) or in a format that the PCF 204 can use to determine and map to the QoS requirements. The PCF 204 provides the information further to the SMF 202 and/or UPF 203 to be provided to the RAN node 104 as part of N2 bearer management procedures.

The UPF 203 may provide 5QI QoS flow with deep packet inspection (DPI) functionality. DPI may use Layers 4-7 look up and use information such as application headers, application pattern, etc. information. This information may be application-specific or based on parameters defined by the internet engineering task force (IETF) and third generation partnership project (3GPP). The UPF 203 passes the information to the SMF 202 for bearer management and to be further provided to the RAN node 104 over the N2 interface.

Edge computing is becoming increasingly relevant with various new media services, such as extended reality (XR). Edge computing allows the XR application data and media streams to be processed, at least partially, by using computing resources deployed at the network edge, for example as an edge cloud. It should be noted that the edge deployment may be with or without cloud. The media stream processing may be offloaded to the edge computing resources, fully using "full remote/cloud processing", or partially using "split processing". In split processing, the media processing is divided between the edge cloud and client components. These solutions allow to convey a subset of the application data to a UE, saving the network infrastructure resources and the radio interface resources, which are relatively scarce and expensive. For example, the subset of the application data may be identified by using pose information pointing out the direction and focus of the end user using the XR application, or by other means. Edge computing in 3GPP networks is described in 3GPP TS 23.558 and 3GPP TS 28.538.

However, the current 3GPP and O-RAN specifications do not define any solution to facilitate, configure, identify, allow/disallow and trigger the edge computing based processing related actions in the RAN.

In high load situations, the RAN may not be able to support the needs of the XR application for high bitrate and low latency (e.g., for video streams). For example, there may be hundreds or thousands of UEs receiving a high-bit-rate downlink video stream in the mobile network at the same time.

An XR media rendering entity or media server can be configured to adapt or reduce the application data flow, so that lower bit rates provided by the mobile network would still provide a high-quality end-user experience for the application. The XR media rendering entity may have the following information per XR application flow: IP addresses and port numbers of the UE 100 and the media server. This information uniquely identifies each UE-specific application flow. However, the XR media rendering entity is not aware of which UE identifier used in the mobile network relates to which application flow.

Ideally, the XR media rendering entity would receive throughput information and/or predictions (or bandwidth predictions) from the RAN to know the available bit rates for each of the application steams benefitting from bit rate reduction rendering actions.

According to the current 3GPP 5G specifications, the RAN can provide, per bearer (e.g., per 5G DRB or 5QI QoS Flow), information and predictions using a vendor-specific (non-standard) interface to the XR media rendering entity. The RAN can provide these predictions using RAN-related temporary UE identifiers, which are used within the RAN, and temporary UE context, QoS flow and CU-UP - UPF GTP tunnel identifiers to the core network to be provided for application bearers in the mobile network. GTP is an abbreviation for general packet radio service (GPRS) tunneling protocol. The serving temporary mobile subscriber identity (S-TMSI) of the UE 100 is known by the RAN and the core network during the UE's initial phase of connecting to the mobile network, but it is later changed by the core network without updating it to the RAN.

Thus, if the RAN provides throughput predictions (or bandwidth predictions) to the XR media rendering entity for UEs together with the UE and bearer identifiers available to the RAN, the XR media rendering entity is not able to map the throughput predictions (or bandwidth predictions) to a specific UE's application flow(s) that need bit rate reductions, unless additional information is provided by the RAN and/or core network.

Thus, there is a need for a solution that enables correlating UE bearer information and RAN resource use information, so that the application server (e.g., media server) can take appropriate actions on an application flow level for enhanced user experience and optimized operator mobile network resource use. Some example embodiments provide solutions to address this mapping issue.

In an example embodiment, there is provided a method for correlating and providing RAN resource use information with application flows (e.g., media streams or any other type of application flow) in order for the application server to be able to mitigate (e.g., reduce), the bit rate for better end-user experience during a high load situation. This example embodiment provides means to allocate, provide and correlate the application flow and related RAN resource use information between the application server and the mobile network.

Some example embodiments allow for network-based application flow mitigation (e.g., bit rate reduction), to ensure better end user experience with reduced network resources (e.g., under a high load situation with limited radio network resources due to subscription limitations, etc.). Some example embodiments may also provide energy savings, as less energy would be needed to transmit data with the reduced bit rate over the radio interface.

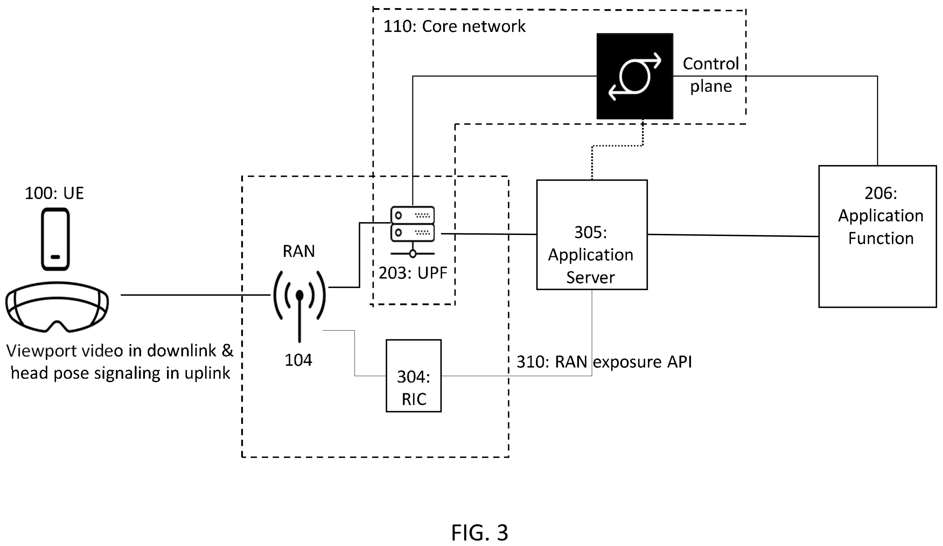

FIG. 3 illustrates an example of a system for network-based processing of application flows (e.g., media streams) with near-real-time QoS control.

In FIG. 3, media processing is split between the application server 305 and the UE 100 to optimize performance and reduce latency. It should be noted that the split processing is used just as an example scenario herein, and other types of deployment scenarios are also possible (e.g., non-split, remote, cloud/edge, or distributed computing). Similarly, media processing is used just as an example herein, and the system may also be applied for any other types of applications.

The application server 305 is a computing entity that runs the software used for providing the application service to end users. For example, the application server 305 may be an edge server. The application server 305 is on the user plane, but may be controlled by or report to the application function 206.

The application server 305 may run any type of application. The application sends an application flow (or application data stream) to the UE 100 via the UPF 203 and near-real-time (near-RT) radio access network intelligent controller (RIC) 304. The UE 100 may send some data or metadata back to the application server 305 for the application to run on the application server 305.

For example, the application server 305 may render XR media and the UE 100 (e.g., a head-mounted display), may receive the rendered media through the network via the UPF 203 and RAN. The UE 100 may also send low-latency feedback or metadata such as head-pose data to the application server 305 to adjust the viewport in real-time (or at least near-real-time). The head pose data refers to information about the orientation and position of the user's head. In the context of XR applications, this data can be used to determine where the user is looking. It helps the system to adjust the displayed content in real-time (or at least near-real-time), ensuring that the user sees the correct XR view based on their head movements. For example, if the XR application is based on 360-degree video, only the portion of the 360-degree video that the user is currently viewing may be sent in the downlink, reducing bandwidth requirements.

The application flow may be identified and correlated with the associated radio bearer(s) by the UPF 203 and the near-RT RIC 304, and the near-RT RIC 304 may provide radio bearer related information (network resource use information) to the application server 305. The application server 305 may adjust the application flow (e.g., media stream) based on this information to ensure optimal performance.

For example, the near-RT RIC 304 may be configured to predict the available bandwidth and provide the bandwidth prediction information to the application server 305, which may then adjust the application flow (e.g., media stream) based on the bandwidth prediction information to ensure optimal performance.

As another example, instead of a bandwidth prediction, the RAN (e.g., RAN node 104 or near-RT RIC 304) may expose a current available bandwidth to the application server 305 via the RAN exposure API 310, and the application server 305 may adjust the application flow (e.g., media stream) to ensure optimal performance.

The system architecture of FIG. 3 involves both the control plane, which manages signaling and control messages, and the user plane, which handles data transfer. The RAN exposure API 310 allows external applications to interact with the RAN for real-time data and control.

The near-RT RIC 304 is a network entity defined in the O-RAN specifications. The near-RT RIC 304 may communicate with the RAN node 104 through the E2 interface for time-sensitive near-real-time management and control of radio resources, such as interference management, handover management, Quality of Service (QoS) management, and radio connection management.

Some example embodiments may be used in any use case where the RAN needs to identify the user or application flow (e.g., media stream) in order to give specific insight about the network performance for the application. As a nonlimiting example, some example embodiments may be applied to entertainment event broadcasting, where network aware split-offloading leads to bandwidth saving in downlink and improved end-user experience through quality adaptation with the smallest possible round-trip-delay.

For example, some example embodiments may be used for radio resource mitigation. However, some example embodiments may also be used more broadly to provide any network resource information (in addition to or as an alternative to the bandwidth predictions) or other types of information, such as connection quality information or location information. The bandwidth information (bandwidth predictions) may relate to the core network's bit rate and may be provided by the core network 110 to the application server 305.

Some example embodiments are described below using principles and terminology of 5G radio access technology without limiting the example embodiments to 5G radio access technology, however.

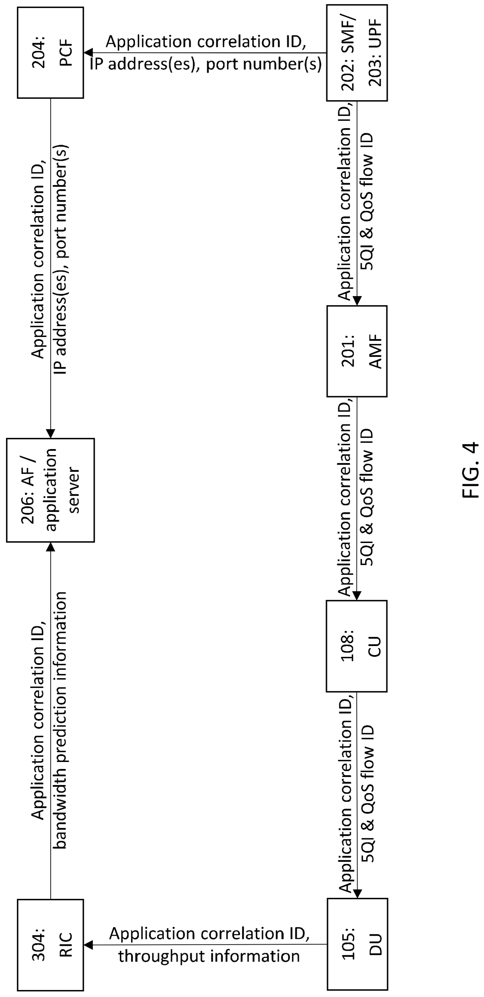

FIG. 4 illustrates a block diagram according to an example embodiment for an SMF/UPF-triggered correlation procedure. In this example embodiment, the application correlation identifier and related correlated RAN resource use information may be provided on a DRB basis (i.e., per DRB).

Referring to FIG. 4, the SMF 202 or UPF 203 may interface with the application function 206 or application server (media server) directly or indirectly via a public or private data network. The SMF 202 or UPF 203 may detect the IP address and port number(s) of the application function 206 or application server, for example per data network name (DNN) or access point name (APN) configuration. The SMF 202 or UPF 203 may allocate an application correlation identifier and provide it to the application function 206 or application server, for example via the PCF 204.

The application correlation identifier indicates or identifies at least one of: one or more application flows served by the application function 206 or application server to a UE 100 via a network node (e.g., a DU 105), and/or a user connection used for delivering the one or more application flows to the UE 100 via the network node. In other words, the application correlation identifier may relate to the one or more applications flows and/or to the user connection (e.g., QoS flow, bearer, RRC connection, PDU session, etc.). The user connection may refer to the connection between the UE 100 and the network node 104, which allows the UE 100 to access network services and transmit and receive data.

For example, the application correlation identifier may be mapped to the one or more application flows with the IP addresses and port number of the UE 100 and the application server, respectively.

There may be an N-to-1 correlation of application flow(s) to QoS flow or PDU set(s) or DRB. Thus, one application correlation identifier may be used for correlating one or more application flows to a QoS flow or PDU set(s) or DRB. If the same (i.e., a single) application correlation identifier is used for multiple application flows, the same application correlation identifier needs to be provided for each application flow (e.g., identified by the IP addresses and port numbers of the UE and the application server. Alternatively, different application correlation identifiers may be used for different application flows.

The SMF 202 or UPF 203 may also provide, to the application function 206 or application server (e.g., via the PCF 204), at least one of: a user identifier of a subscribed user of the UE 100, an identifier of the UE 100, a public land mobile network (PLMN) identifier, an operator network identifier, an IP address allocated to the UE 100, a port number associated with the UE 100, an IP address of an application (or application server) associated with the one or more application flows, or a port number of the application (or application server) associated with the one or more application flows.

The application function 206 or application server receives and saves the application correlation identifier and maps it to the one or more application flows (e.g., identified by the IP address and port number of the UE 100 or the application).

The SMF 202 or UPF 203 triggers establishment of one or more 5QI QoS flows associated with the one or more application flows in the mobile network. The SMF 202 or UPF 203 provides the identifier(s) of the one or more 5QI QoS flows and the application correlation identifier to a CU 108 via an AMF 201. The SMF 202 or UPF 203 may optionally also provide at least one of the following to the CU 108 via the AMF 201: the user identifier, the identifier of the UE 100, or the PLMN identifier.

The CU 108 triggers 5G RAN DRB establishment in the RAN. The CU 108 provides, to the DU 105, the identifier(s) of the one or more 5QI QoS flows and the application correlation identifier. The CU 108 may optionally also provide at least one of the following to the DU 105: the user identifier, the identifier of the UE 100, or the PLMN identifier.

The DU 105 triggers throughput reporting based on DRB/QoS flow or PDU set importance basis. The DU 105, provides, to the near-RT RIC 304, the application correlation identifier and throughput information indicating the throughput of the communication link (radio link) between the DU 105 and the UE 100. The DU 105 may optionally also provide at least one of the following to the near-RT RIC 304: the user identifier, the identifier of the UE 100, or the PLMN identifier.

The near-RT RIC 304 mediates the throughput information into bandwidth prediction information for the communication link. The bandwidth prediction information indicates network resources predicted to be used by the UE 100 in the future, and thus they also indicate the predicted available capacity of the communication link between the UE 100 and the DU 105.

The near-RT RIC 304 provides, to the application function 206 or application server, the application correlation identifier and network resource use information comprising the bandwidth prediction information. For example, the near-RT RIC 304 may transmit, to the application function 206 or application server, a message comprising the network resource use information and the application correlation identifier. The message may optionally further comprise at least one of: the user identifier, the identifier of the UE 100, or the PLMN identifier.

The application function 206 or application server correlates (on UE level) the one or more application flows or the user connection to the network resource use information, based at least on the application correlation identifier. The correlation may further be based on the at least one of: the user identifier, the identifier of the UE 100, or the PLMN identifier.

The application function 206 or application server performs one or more actions for adjusting the one or more application flows or the user connection, based on the information correlated to the one or more application flows or to the user connection.

For example, the one or more actions may comprise adjusting a bit rate of the one or more application flows based on the predicted available capacity of the communication link (i.e., to fit the one or more application flows within the predicted available resources). The bit rate refers to the amount of data transmitted per time unit (in uplink and/or downlink). For example, the bit rate may be measured in bits per second (bps), kilobits per second (kbps), megabits per second (Mbps), or gigabits per second (Gbps).

The adjustment of the bit rate may comprise reducing the bit rate of the one or more application flows, based on the network resource use information indicating that the available capacity is below a first threshold.

Alternatively, the adjustment of the bit rate may comprise increasing the bit rate of the one or more application flows, based on the network resource use information indicating that the available capacity is above a second threshold (which may be the same as or different than the first threshold).

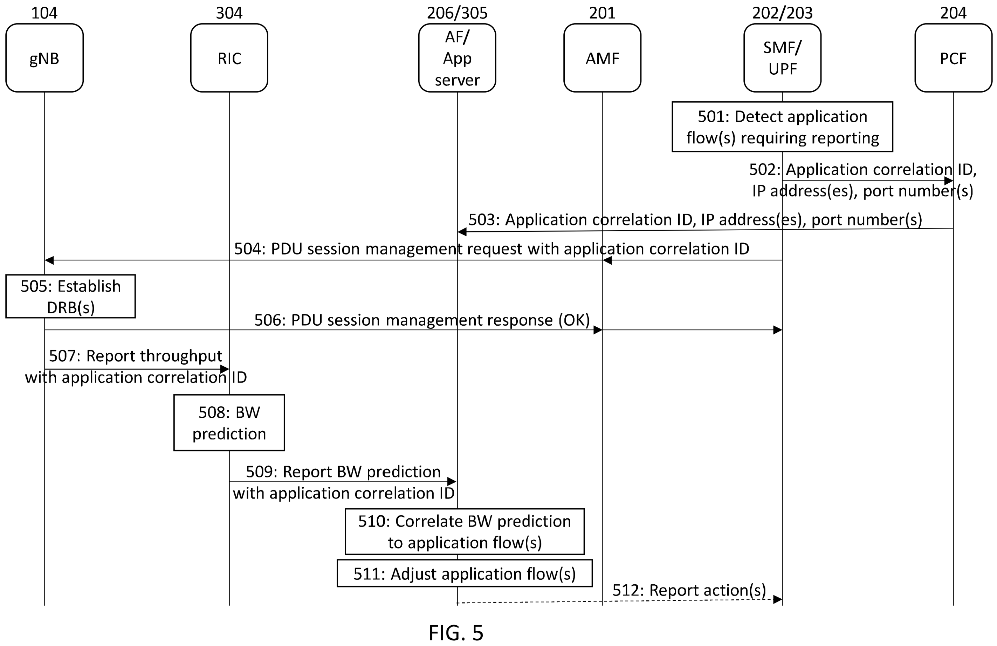

FIG. 5 illustrates a signal flow diagram according to an example embodiment for an SMF/UPF-triggered correlation procedure.

Referring to FIG. 5, at 501, the SMF 202 or UPF 203 detects one or more application flows requiring reporting. For example, the SMF 202 or UPF 203 may detect the IP address and port number(s) of the application function 206 or application server 305, for example per data network name (DNN) or access point name (APN) configuration. The SMF 202 and/or UPF 203 may comprise collocated PCF functionality that detects the one or more application flows.

For example, the one or more application flows may comprise an extended reality application flow or a media stream, or any other type of application flow.

The SMF 202 or UPF 203 may be pre-configured with a reporting configuration (e.g., DNN, 5QI, AF information identifying the application function 206 or application server 305, etc.).

The reporting configuration may be used for configuring and identifying media data reporting, for example per: application or sub-set of application (e.g. application identity or type), user (e.g., by user identities or other grouping of users) bearer (e.g., DRB and related QoS flow(s) or other network infrastructure and UE resources used to convey specific application data, with e.g. bearer identity, IP address/port number, QoS classification such as 5QI, etc.), PDU session or packet data network connection or other grouping of network infrastructure and user device resources serving and carrying application data flow(s) (e.g., identified by DNN/APN, IP address and port number, etc.), network slice or similar grouping of resources that can be used by many users with common identification such as network slice, PLMN etc., category of the user (e.g. normal/low priority or bronze/silver user, but not for high priority or emergency category (or priority), platinum user etc.), a specific application data pattern distinguishing it from other types of traffic (e.g. specific data rate, varying application data payload size, interval, etc.), or a combination of some or all of the above.

At 502, the SMF 202 or UPF 203 may allocate an application correlation identifier for the one or more application flows, and the SMF 202 or UPF 203 transmits the application correlation identifier to the PCF 204. Alternatively, the application correlation identifier may be pre-allocated.

The application correlation identifier indicates or identifies at least one of: the one or more application flows served by the application function 206 or application server 305 to a UE 100 via a network node 104, and/or a user connection used for delivering the one or more application flows to the UE 100 via the network node 104. In other words, the application correlation identifier may relate to the one or more applications flows and/or to the user connection (e.g., QoS flow, bearer, RRC connection, PDU session, etc.).

The application correlation identifier or a part of it may identify the application server 305, so that the application correlation identifier can be used in the RAN to correlate with the right application server 305. It should be noted that the application correlation identifier may be changed in case of UE mobility, using handover, RRC idle mode mobility or RRC inactive mode mobility, etc. For example, if the application server changes in case of mobility (or other reasons), the part of the application correlation identifier that identifies the application server may be updated to identify the new application server.

The application correlation identifier may be a unique separate identifier, or a combination of UE identifier and application flow identifier, such as IP addresses and port numbers of the UE and the application server and corresponding mobile network QoS flow identifier and RAN DRB identifier and/or UE identifier that make it correlatable or unique for the RAN and the application function 206 or application server 305.

Within the system and/or mobile network, one UE identifier and UE's application flow(s) may have different forms in different network elements and mapped from one to another.

The application correlation identifier may comprise at least one of: an application flow correlation identifier (e.g., an identifier of the application flow(s) and the related QoS flow or DRB), an application type identifier, a PLMN identifier (e.g., country code and mobile network code, an identifier of the entity that granted or allocated the application correlation identifier (e.g., UPF identifier, PCF identifier, or AF identifier), or a UE correlation identifier. The format of the application correlation identifier may be, for example, N x 8 bits (N≥1), i.e., 8 bits for each identifier comprised in the application correlation identifier.

In one embodiment, the application correlation identifier may comprise an application identifier for identifying an application (or the application server 305) associated with the one or more application flows, and an application correlation instance for identifying an instance of the application. In other words, the application correlation identifier may be a combination of the application identifier and the application correlation instance, allowing for precise tracking and correlation of different instances of the same application.

The application identifier is a unique identifier for the application itself. The application identifier remains the same across all instances of the application.

The application correlation instance is a unique identifier for a given instance of the application. The application correlation instance may be different for each user or session of the same application (i.e., each instance can be individually tracked and correlated).

The SMF 202 or UPF 203 may also transmit, to the PCF 204, at least one of: a user identifier of a subscribed user of the UE 100, an identifier of the UE 100, a public land mobile network (PLMN) identifier, an operator network identifier, an IP address allocated to the UE 100, a port number associated with the UE 100, an IP address of an application (or application server 305) associated with the one or more application flows, or a port number of the application (or application server 305) associated with the one or more application flows.

At 503, the PCF 204 transmits, or forwards, the application correlation identifier to the application function 206 or application server 305.

The PCF 204 may also transmit, or forward, to the application function 206 or application server 305, at least one of: the user identifier, the identifier of the UE 100, the PLMN identifier, the operator network identifier, the IP address allocated to the UE 100, the port number associated with the UE 100, the IP address of the application (or application server 305) associated with the one or more application flows, or the port number of the application (or application server 305) associated with the one or more application flows.

The PCF 204 may be pre-configured with a reporting configuration (e.g., DNN, 5QI, AF information identifying the application function 206 or application server 305, etc.), based on which the application correlation identifier and/or other information may be forwarded to the application function 206 or application server 305.

The application function 206 or application server 305 receives and saves (or stores) the application correlation identifier (e.g., in an internal memory of the application server 305) and maps it to the one or more application flows (e.g., identified by the IP address and port number of the UE 100 or the application).

At 504, the SMF 202 or UPF 203 transmits, to a network node 104 (e.g., a gNB), via the AMF 201, a PDU session management request together with at least a part of the application correlation identifier and one or more QoS identifiers of one or more QoS flows that are established or modified for the one or more application flows.

The "at least a part of the application correlation identifier" means that the application identifier and the application correlation instance may be provided together or separately (possibly even by separate network entities).

The PDU session management request is a procedure used in 5G networks to allocate or modify resources for a PDU session. The PDU session is a container for the one or more application flows. This request may be initiated by the SMF 202 or UPF 203 to ensure that the QoS requirements for the PDU session are met.

When a UE 100 wants to access data services, it initiates a PDU session establishment request. This request includes details like the PDU session identifier, requested PDU session type, and QoS parameters.

During the PDU session establishment, the SMF 202 or UPF 203 interacts with the PCF 204 to obtain the necessary QoS parameters. These parameters define the QoS flows, which are essentially the rules and characteristics that ensure the required service quality for different types of data traffic.

If there is a need to modify the existing QoS flows (e.g., due to changes in network conditions or user requirements), the SMF 202 or UPF 203 sends the PDU session management request. This request can adjust parameters like the Allocation and Retention Priority (ARP), Guaranteed Bit Rate (GBR), and Maximum Bit Rate (MBR) to maintain or improve the QoS.

The SMF 202 or UPF 203 uses the information from the PCF 204 to enforce QoS rules across the network. This involves configuring the User Plane Function (UPF) to handle data packets according to the specified QoS parameters, ensuring that the data traffic meets the required performance standards.

The PDU session management request may optionally further comprise at least one of: the user identifier, the identifier of the UE 100, the IP address allocated to the UE 100, the port number associated with the UE 100, an identifier of at least a subset of a QoS flow associated with the one or more application flows, an identifier of (each of) one or more PDU sets associated with the one or more application flows, or the identifier of the entity or network (e.g., PLMN identifier) that allocated the application correlation identifier.

The user identifier is a unique identifier assigned to a user who has subscribed to a network service. It helps in identifying and authenticating the user within the network. For example, the user identifier may be (but is not limited to) the international mobile subscriber identity (IMSI) or a temporary identity such as a serving temporary mobile subscriber identity (S-TMSI).

The identifier of the UE 100 refers to a unique identifier assigned to the UE 100 (i.e., to the device itself). Some examples of the identifier of the UE 100 include (but are not limited to) the generic public subscription identifier (GPSI) and the international mobile equipment identity (IMEI). GPSI may be used for addressing a 3GPP subscription in different data networks outside of the 3GPP system. The AMF 201 or SMF 202 or UPF 203 may use the UDM 205 to fetch the GPSI.

The IP address assigned to the UE 100 allows the UE 100 to communicate over the internet and it is used for routing data packets to and from the UE 100.

The port number associated with the UE 100 may be used in conjunction with the IP address to identify specific processes or services running on the UE 100.

The identifier of at least the subset of the QoS flow may be used to specify a particular QoS flow or a subset of it. The QoS flow defines the performance characteristics (e.g., latency, bandwidth) required for the application data. This identifier helps in ensuring that the application data is treated according to its QoS requirements.

A PDU set consists of one or more PDUs that carry the application data. The identifier of the one or more PDU sets helps in managing and correlating these PDUs to ensure that the data is correctly assembled and processed.

The identifier of the entity or the network that allocated the application correlation identifier specifies the entity or network that assigned the application correlation identifier, thus making the combination of the application correlation identifier and the identifier of the entity or the network globally unique. In this example embodiment, the SMF 202 or UPF 203 is the entity that allocated the application correlation identifier.

At 505, based on the received PDU session management request, the network node 104 triggers DRB establishment for establishing one or more data radio bearers for carrying user data associated with the one or more application flows between the UE 100 and the network node 104. That is, the network node 104 is responsible for setting up the required radio resources. The network node 104 configures the one or more DRBs based on the QoS parameters provided by the SMF 202 or UPF 203. In other words, the one or more DRBs are configured to ensure that the data traffic adheres to the QoS requirements specified in the PDU session (e.g., latency, bandwidth, and priority), which are needed for maintaining the performance of the one or more application flows.

At 506, the network node 104 transmits, to the SMF 202 or UPF 203, via the AMF 201, a PDU session management response to indicate that the requested resources for the PDU session have been successfully allocated.

At 507, the network node 104 (e.g., gNB) transmits, to the near-RT RIC 304 (or to another network entity, e.g., comprised in or collocated with the gNB or application server 305), one or more throughput reports for reporting the experienced throughput (in uplink and/or downlink). The one or more throughput reports may be provided on a DRB level (per DRB of the one or more data radio bearers), or PDU set importance level, or a combination of these.

The one or more throughput reports also comprise the at least part of the application correlation identifier.

The one or more throughput reports may optionally also comprise at least one of: the user identifier of the subscribed user of the UE 100, the identifier of the UE 100, the IP address allocated to the UE 100, the port number associated with the UE 100, an identifier of (each of) the one or more data radio bearers established for carrying the one or more application flows, the identifier of at least the subset of the QoS flow associated with the one or more application flows, the identifier of (each of) one or more PDU sets associated with the one or more application flows, or the identifier of the entity or the network that allocated the application correlation identifier.

The network node 104 may be pre-configured with a reporting configuration that indicates, for example, the address (e.g., IP address) of the near-RT RIC 304 (or other network entity), and/or a reporting periodicity for transmitting the one or more throughput reports. In other words, the network node 104 may transmit the one or more throughput reports based on this reporting configuration. For example, the network node 104 may transmit the one or more throughput reports sequentially at certain time intervals as indicated by the reporting periodicity. The reporting configuration may further comprise, for example, 5QI information.

At 508, the near-RT RIC 304 (or other network entity) mediates the one or more throughput reports into bandwidth prediction information for the communication link (in uplink and/or downlink) between the UE 100 and the network node 104 based on the mediated throughput information. The bandwidth prediction information indicates network resources predicted to be used by the UE 100 in the future, and thus they also indicate the predicted available capacity of the communication link between the UE 100 and the network node 104.

For example, the throughput information may be indicated as a number of physical resource blocks (PRBs), but the application function 206 or application server 305 may not know how to process such information. The mediation means that the bandwidth prediction information is provided in a format (e.g., a bit rate) that can be understood and utilized by the application function 206 or application server 305.

At 509, the near-RT RIC 304 (or other network entity) generates and transmits, to the application function 206 or application server 305, a message comprising the at least part of the application correlation identifier and network resource use information (i.e., information related to the communication link) comprising the bandwidth prediction information. The bandwidth prediction information may be provided on a DRB level (e.g., one bandwidth prediction per DRB), or PDU set importance level, or a combination of these.

The near-RT RIC 304 (or other network entity) may be pre-configured with a reporting configuration that indicates, for example, the IP address of the application function 206 or application server 305. In other words, the near-RT RIC 304 (or other network entity) may transmit the message based on this reporting configuration. The reporting configuration may further comprise, for example, 5QI and/or bandwidth information.

The message may optionally further comprise at least one of: the user identifier of the subscribed user of the UE 100, the identifier of the UE 100, the IP address allocated to the UE 100, the port number associated with the UE 100, the identifier of (each of) the one or more data radio bearers established for carrying the one or more application flows, the identifier of at least the subset of the QoS flow associated with the one or more application flows, the identifier of (each of) one or more PDU sets associated with the one or more application flows, or the identifier of the entity or the network that allocated the application correlation identifier.

At 510, the application function 206 or application server 305 correlates the one or more application flows or the user connection to the network resource use information, based at least on the application correlation identifier.

The correlation may further be based on the at least one of: the user identifier, the identifier of the UE 100, the internet protocol address allocated to the UE 100, the port number associated with the UE 100, the identifier of the one or more data radio bearers, the identifier of at least the subset of the quality of service flow, the identifier of the one or more protocol data unit sets, or the identifier of the entity or the network that allocated the application correlation identifier.

In other words, the correlation may be based on one unique identifier of the one or more application flows, or a combination of multiple identities, such as the application flow identification (e.g., QoS flow identifier and/or DRB identifier), UE identifier, and application identifier.

It should be noted that, in certain network setups and use cases, a subset of the above information may be used and/or additional information may be used. For example, the identifier of the UE 100 may not be needed, if the application correlation identifier can be uniquely used for correlating the bandwidth prediction information to the one or more application flows (e.g., if used locally at an edge server with only one application server, or if different application identifier ranges are allocated to different application servers, etc.). Furthermore, additional information can be used to identify for which users this correlation information is needed, to identify a specific use for it, etc. (e.g. DNN, APN, network slice information, etc.)

The message received from the near-RT RIC 304 (or other network entity) may comprise both the application identifier and the application correlation instance. Alternatively, the message received from the near-RT RIC 304 (or other network entity) may comprise only the application identifier, in which case the application function 206 or application server 305 may receive the application correlation instance in another message (e.g., from another network entity). Alternatively, the message received from the near-RT RIC 304 (or other network entity) may comprise only the application correlation instance, in which case the application function 206 or application server 305 may receive the application identifier in another message (e.g., from another network entity).

At 511, the application function 206 or application server 305 performs one or more actions for adjusting the one or more application flows or the user connection (in uplink and/or downlink), based on the bandwidth prediction information correlated to the one or more application flows or to the user connection.

The application function 206 or application server 305 may be pre-configured with a mitigation configuration indicating the one or more actions to be performed.

For example, the one or more actions may comprise adjusting a bit rate of the one or more application flows based on the predicted available capacity of the communication link (i.e., to fit the one or more application flows within the predicted available resources).

The adjustment of the bit rate may comprise reducing the bit rate of the one or more application flows, based on the network resource use information indicating that the available capacity is below a first threshold.

Alternatively, the adjustment of the bit rate may comprise increasing the bit rate of the one or more application flows, based on the network resource use information indicating that the available capacity is above a second threshold (which may be the same as or different than the first threshold).

It should be noted that there may be a 1:1, 1:N or N:M mapping between steps 507-510. For example, a single message of step 507 may not be sufficient for the bandwidth prediction of step 508 (i.e., the near-RT RIC 304 may collect multiple throughput reports before performing the bandwidth prediction).

At 512, the application function 206 or application server 305 may optionally transmit, to the SMF 202 or UPF 203 (e.g., via the PCF 204), an indication indicating the one or more actions performed for adjusting the one or more application flows or the user connection. This enhances coordination with the core network, leading to more efficient network management and resource allocation.

For example, the core network function can use the information about the adjustments to better manage the QoS across the network. Furthermore, in this way, the core network can keep track of the action(s) taken and ensure they align with the overall network policies and objectives.

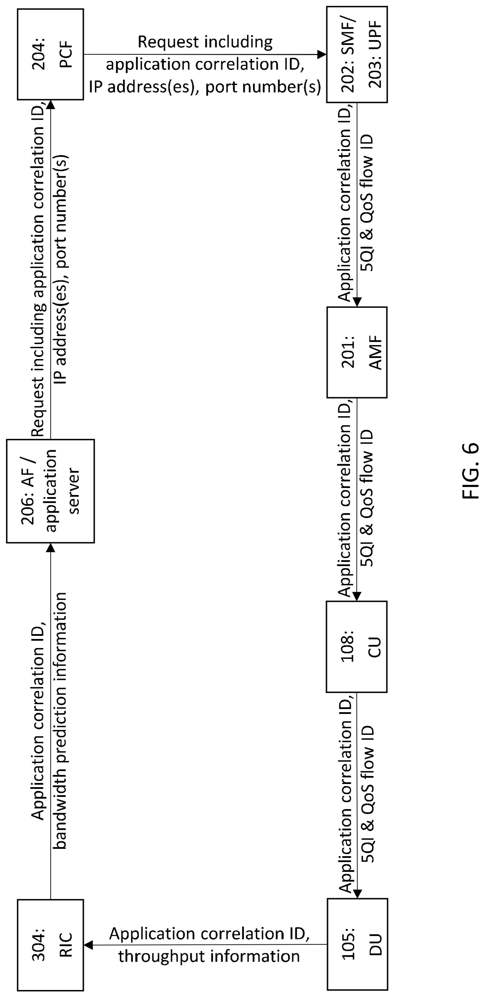

FIG. 6 illustrates a block diagram according to an example embodiment for an AF-triggered correlation procedure. In this example embodiment, the application correlation identifier and related correlated RAN resource use information may be provided on a DRB basis (i.e., per DRB).

Referring to FIG. 6, at application flow establishment (or later when the application flow(s) already exist), the application function 206 or application server 305 (media server) triggers a request for the network resource use information to the SMF 202 or UPF 203 (e.g., via the PCF 204) with the application correlation identifier. In this example embodiment, the application function 206 or application server 305 may be the entity that allocates the application correlation identifier.

It should be noted that the PCF 204 may be optional. I.e., the application function 206 or application server 305 may alternatively communicate directly with the SMF 202 or UPF 203.

The request may also comprise the corresponding IP address(es) and port number(s) of the UE 100 and/or the application function 206 or application server 305. The application function 206 or application server 305 may request the network exposure function (NEF) for the related configurations, etc., before or after triggering the request towards the SMF 202 or the UPF 203.

The application correlation identifier indicates or identifies at least one of: one or more application flows served by the application function 206 or application server 305 to a UE 100 via a network node (e.g., a DU 105), and/or a user connection used for delivering the one or more application flows to the UE 100 via the network node. In other words, the application correlation identifier may relate to the one or more applications flows and/or to the user connection (e.g., QoS flow, bearer, RRC connection, PDU session, etc.). The SMF 202 or UPF 203 correlates the received application correlation identifier to the one or more application flows (e.g., based on the IP addresses and port numbers of the UE 100 and the application function 206 or application server 305).

The SMF 202 or UPF 203 may optionally provide, to the application function 206 or application server 305 (e.g., via the PCF 204), a response comprising at least one of: a user identifier of a subscribed user of the UE 100, an identifier of the UE 100, a public land mobile network (PLMN) identifier, or an operator network identifier. The SMF 202 or UPF 203 may fetch the identifier of the UE 100 from the UDM 205 (directly or via the AMF 201).

The SMF 202 or UPF 203 triggers a QoS flow modification procedure for modifying one or more 5QI QoS flows associated with the one or more application flows in the mobile network. The SMF 202 or UPF 203 provides the identifier(s) of the one or more 5QI QoS flows and the application correlation identifier to a CU 108 via the AMF 201. The SMF 202 or UPF 203 may optionally also provide at least one of the following to the CU 108 via the AMF 201: the user identifier, the identifier of the UE 100, or the PLMN identifier.

The CU 108 saves (or stores), per QoS flow, the application correlation identifier and provides them to the DU 105. The CU 108 may optionally also provide at least one of the following to the DU 105: the user identifier, the identifier of the UE 100, or the PLMN identifier.

The DU 105 triggers throughput reporting based on DRB/QoS flow or PDU set importance basis. The DU 105, provides, to the near-RT RIC 304, the application correlation identifier and throughput information indicating the throughput of the communication link (radio link) between the DU 105 and the UE 100. The DU 105 may optionally also provide at least one of the following to the near-RT RIC 304: the user identifier, the identifier of the UE 100, or the PLMN identifier.

The near-RT RIC 304 mediates the throughput information into bandwidth prediction information for the communication link. The bandwidth prediction information indicates network resources predicted to be used by the UE 100 in the future, and thus they also indicate the predicted available capacity of the communication link between the UE 100 and the DU 105.

The near-RT RIC 304 provides, to the application function 206 or application server 305, the application correlation identifier and network resource use information comprising the bandwidth prediction information. For example, the near-RT RIC 304 may transmit, to the application function 206 or application server 305, a message comprising the network resource use information and the application correlation identifier. The message may optionally further comprise at least one of: the user identifier, the identifier of the UE 100, or the PLMN identifier.

The application function 206 or application server 305 correlates (on UE level) the one or more application flows or the user connection to the network resource use information, based at least on the application correlation identifier. The correlation may further be based on the at least one of: the user identifier, the identifier of the UE 100, or the PLMN identifier.

The application function 206 or application server 305 performs one or more actions for adjusting the one or more application flows or the user connection, based on the information correlated to the one or more application flows or to the user connection.

For example, the one or more actions may comprise adjusting a bit rate of the one or more application flows based on the predicted available capacity of the communication link (i.e., to fit the one or more application flows within the predicted available resources).

The adjustment of the bit rate may comprise reducing the bit rate of the one or more application flows, based on the network resource use information indicating that the available capacity is below a first threshold.

Alternatively, the adjustment of the bit rate may comprise increasing the bit rate of the one or more application flows, based on the network resource use information indicating that the available capacity is above a second threshold (which may be the same as or different than the first threshold).

In another embodiment, the AF or SMF/UPF (possibly with collocated PCF functionality) may provide IP addresses and port numbers of the IP connection to the other (e.g., from AF to SMF/UPF, or from SMF/UPF to AF) and receives the application correlation identifier as a response.

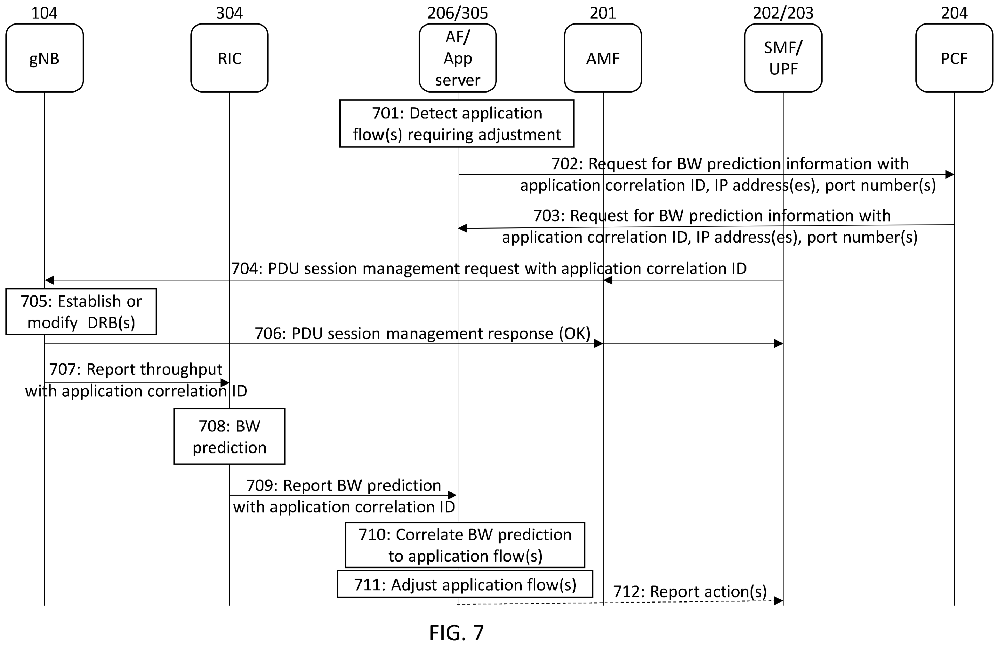

FIG. 7 illustrates a signal flow diagram according to an example embodiment for an AF-triggered correlation procedure.

Referring to FIG. 7, at 701, the application function 206 or application server 305 detects a need for adjusting one or more application flows (e.g., requiring bit rate mitigation). For example, the one or more application flows may comprise an extended reality application flow or a media stream, or any other type of application flow.

The application function 206 or application server 305 may allocate an application correlation identifier for the one or more application flows. Alternatively, the application correlation identifier may be pre-allocated.

The application correlation identifier indicates or identifies at least one of: the one or more application flows served by the application function 206 or application server 305 to a UE 100 via a network node 104, and/or a user connection used for delivering the one or more application flows to the UE 100 via the network node 104. In other words, the application correlation identifier may relate to the one or more applications flows and/or to the user connection (e.g., QoS flow, bearer, RRC connection, PDU session, etc.).

At 702, based on the detection, the application function 206 or application server 305 transmits, to the PCF 204, a request (or a message comprising the request) for information (e.g., bandwidth prediction information) related to the communication link between the network node 104 and the UE 100, wherein the request comprises at least a part of the application correlation identifier.

The request (message) may further comprises at least one of: a user identifier of a subscribed user of the UE 100, an identifier of the UE 100, a PLMN identifier, an operator network identifier, an IP address allocated to the UE 100, a port number associated with the UE 100, an IP address of an application (or application server 305) associated with the one or more application flows, a port number of the application (or application server 305) associated with the one or more application flows, an application type identifier of the application (or application server 305) associated with the one or more application flows, an application server identifier (or application function identifier) of the application server 305 (or the application function 206) serving the one or more application flows, or a report type identifier for identifying a requested type of reporting.

The PLMN identifier is a unique code that identifies a specific mobile network operator. The PLMN identifier may consist of the Mobile Country Code (MCC) and the Mobile Network Code (MNC). The PLMN identifier helps to ensure that the one or more application flows are correctly associated with the appropriate network operator.

The operator network identifier specifies the network operator providing the service. It can include information such as the operator's name or a unique code assigned to the operator. It helps in managing and routing data within the operator's network.

The IP address of the application refers to the IP address of the server or endpoint where the application is hosted. It helps in routing the application data to the correct destination on the network.

The port number of the application identifies a specific service or process on the application server 305. It ensures that the data is directed to the correct application or service.

The application type identifier specifies the type of application (e.g., video streaming, online gaming, etc.). It helps in applying the appropriate QoS parameters and managing the data flows according to the application's requirements.

The application server identifier uniquely identifies the application server 305 that is providing the one or more application flows to the UE 100. It helps in managing and routing the data between the application server 305 and the UE 100.

The report type identifier specifies the type of information requested (e.g., bandwidth prediction information, location information, etc.). It helps in generating and retrieving the appropriate reports.

At 703, the PCF 204 transmits or forwards the request to the SMF 202 or UPF 203. The PCF 204 may be pre-configured with a reporting configuration (e.g., DNN, 5QI, AF information, etc.), based on which the request may be forwarded to the SMF 202 or UPF 203.

The SMF 202 or UPF 203 correlates the received application correlation identifier to the one or more application flows (e.g., based on the IP addresses and port numbers of the UE 100 and the application function 206 or application server 305).

At 704, based on the received request, the SMF 202 or UPF 203 transmits, to a network node 104 (e.g., a gNB), via the AMF 201, a PDU session management request together with the at least part of the application correlation identifier and one or more QoS identifiers of one or more QoS flows that are established or modified for the one or more application flows.

The SMF 202 or UPF 203 may be pre-configured with a reporting configuration (e.g., DNN, 5QI, AF information identifying the application function 206 or application server 305, etc.), based on which the PDU session management request (together with the at least part of the application correlation identifier) may be transmitted to the network node 104.

The "at least a part of the application correlation identifier" means that the application identifier and the application correlation instance may be provided together or separately (possibly even by separate network entities).

The SMF 202 or UPF 203 uses the information from the PCF 204 to enforce QoS rules across the network. This involves configuring the User Plane Function (UPF) to handle data packets according to the specified QoS parameters, ensuring that the data traffic meets the required performance standards.

The PDU session management request may optionally further comprise at least one of: the user identifier, the identifier of the UE 100, the IP address allocated to the UE 100, the port number associated with the UE 100, an identifier of at least a subset of a QoS flow associated with the one or more application flows, an identifier of (each of) one or more PDU sets associated with the one or more application flows, or the identifier of the entity or network (e.g., PLMN identifier) that allocated the application correlation identifier. In this example embodiment, the application function 206 or application server 305 or the application may be the entity that allocated the application correlation identifier.

At 705, based on the received PDU session management request, the network node 104 establishes or modifies one or more data radio bearers for carrying user data associated with the one or more application flows between the UE 100 and the network node 104. That is, the network node 104 is responsible for setting up the required radio resources. The network node 104 configures the one or more DRBs based on the QoS parameters provided by the SMF 202 or UPF 203. In other words, the one or more DRBs are configured to ensure that the data traffic adheres to the QoS requirements specified in the PDU session (e.g., latency, bandwidth, and priority), which are needed for maintaining the performance of the one or more application flows.

At 706, the network node 104 transmits, to the SMF 202 or UPF 203, via the AMF 201, a PDU session management response to indicate that the requested resources for the PDU session have been successfully allocated.

At 707, the network node 104 (e.g., gNB) transmits, to the near-RT RIC 304 (or to another network entity, e.g., comprised in or collocated with the gNB or application server 305), one or more throughput reports for reporting the experienced throughput (in uplink and/or downlink). The one or more throughput reports may be provided on a DRB level (per DRB of the one or more data radio bearers), or PDU set importance level, or a combination of these.

The one or more throughput reports also comprise the at least part of the application correlation identifier.

The one or more throughput reports may optionally also comprise at least one of: the user identifier of the subscribed user of the UE 100, the identifier of the UE 100, the IP address allocated to the UE 100, the port number associated with the UE 100, an identifier of (each of) the one or more data radio bearers carrying the one or more application flows, the identifier of at least the subset of the QoS flow associated with the one or more application flows, the identifier of (each of) one or more PDU sets associated with the one or more application flows, or the identifier of the entity or the network that allocated the application correlation identifier.

The network node 104 may be pre-configured with a reporting configuration that indicates, for example, the address (e.g., IP address) of the near-RT RIC 304 (or other network entity), and/or a reporting periodicity for transmitting the one or more throughput reports. In other words, the network node 104 may transmit the one or more throughput reports based on this reporting configuration. For example, the network node 104 may transmit the one or more throughput reports sequentially at certain time intervals as indicated by the reporting periodicity. The reporting configuration may further comprise, for example, 5QI information.

At 708, the near-RT RIC 304 (or other network entity) mediates the one or more throughput reports into bandwidth prediction information for the communication link (in uplink and/or downlink) between the UE 100 and the network node 104 based on the mediated throughput information. The bandwidth prediction information indicates network resources predicted to be used by the UE 100 in the future, and thus they also indicate the predicted available capacity of the communication link between the UE 100 and the network node 104.

For example, the throughput information may be indicated as a number of physical resource blocks (PRBs), but the application function 206 or application server 305 may not know how to process such information. The mediation means that the bandwidth prediction information is provided in a format (e.g., a bit rate) that can be understood and utilized by the application function 206 or application server 305.

At 709, the near-RT RIC 304 (or other network entity) generates and transmits, to the application function 206 or application server 305, a message comprising the at least part of the application correlation identifier and network resource use information (i.e., information related to the communication link) comprising the bandwidth prediction information. The bandwidth prediction information may be provided on a DRB level (e.g., one bandwidth prediction per DRB), or PDU set importance level, or a combination of these.

The message may optionally further comprise at least one of: the user identifier of the subscribed user of the UE 100, the identifier of the UE 100, the IP address allocated to the UE 100, the port number associated with the UE 100, the identifier of (each of) the one or more data radio bearers carrying the one or more application flows, the identifier of at least the subset of the QoS flow associated with the one or more application flows, the identifier of (each of) one or more PDU sets associated with the one or more application flows, or the identifier of the entity or the network that allocated the application correlation identifier.

The near-RT RIC 304 (or other network entity) may be pre-configured with a reporting configuration that indicates, for example, the IP address of the application function 206 or application server 305. In other words, the near-RT RIC 304 (or other network entity) may transmit the message based on this reporting configuration. The reporting configuration may further comprise, for example, 5QI and/or bandwidth information.

At 710, the application function 206 or application server 305 correlates the one or more application flows or the user connection to the network resource use information, based at least on the application correlation identifier.

The correlation may further be based on the at least one of: the user identifier, the identifier of the UE 100, the internet protocol address allocated to the UE 100, the port number associated with the UE 100, the identifier of the one or more data radio bearers, the identifier of at least the subset of the quality of service flow, the identifier of the one or more protocol data unit sets, or the identifier of the entity or the network that allocated the application correlation identifier.

In other words, the correlation may be based on one unique identifier of the one or more application flows, or a combination of multiple identities, such as the application flow identification (e.g., QoS flow identifier and/or DRB identifier), UE identifier, and application identifier.

It should be noted that, in certain network setups and use cases, a subset of the above information may be used and/or additional information may be used. For example, the identifier of the UE 100 may not be needed, if the application correlation identifier can be uniquely used for correlating the bandwidth prediction information to the one or more application flows (e.g., if used locally at an edge server with only one application server, or if different application identifier ranges are allocated to different application servers, etc.). Furthermore, additional information can be used to identify for which users this correlation information is needed, to identify a specific use for it, etc. (e.g. DNN, APN, network slice information, etc.)

The message received from the near-RT RIC 304 (or other network entity) may comprise both the application identifier and the application correlation instance. Alternatively, the message received from the near-RT RIC 304 (or other network entity) may comprise only the application identifier, in which case the application function 206 or application server 305 may receive the application correlation instance in another message (e.g., from another network entity). Alternatively, the message received from the near-RT RIC 304 (or other network entity) may comprise only the application correlation instance, in which case the application function 206 or application server 305 may receive the application identifier in another message (e.g., from another network entity).

At 711, the application function 206 or application server 305 performs one or more actions for adjusting the one or more application flows or the user connection (in uplink and/or downlink), based on the bandwidth prediction information correlated to the one or more application flows or to the user connection.

The application function 206 or application server 305 may be pre-configured with a mitigation configuration indicating the one or more actions to be performed.

For example, the one or more actions may comprise adjusting a bit rate of the one or more application flows based on the predicted available capacity of the communication link (i.e., to fit the one or more application flows within the predicted available resources).

The adjustment of the bit rate may comprise reducing the bit rate of the one or more application flows, based on the network resource use information indicating that the available capacity is below a first threshold.

Alternatively, the adjustment of the bit rate may comprise increasing the bit rate of the one or more application flows, based on the network resource use information indicating that the available capacity is above a second threshold (which may be the same as or different than the first threshold).

It should be noted that there may be a 1:1, 1:N or N:M mapping between steps 707-710. For example, a single message of step 707 may not be sufficient for the bandwidth prediction of step 708 (i.e., the near-RT RIC 304 may collect multiple throughput reports before performing the bandwidth prediction).

At 712, the application function 206 or application server 305 may optionally transmit, to the SMF 202 or UPF 203 (e.g., via the PCF 204), an indication indicating the one or more actions performed for adjusting the one or more application flows or the user connection. This enhances coordination with the core network, leading to more efficient network management and resource allocation.

For example, the core network function can use the information about the adjustments to better manage the QoS across the network. Furthermore, in this way, the core network can keep track of the action(s) taken and ensure they align with the overall network policies and objectives.

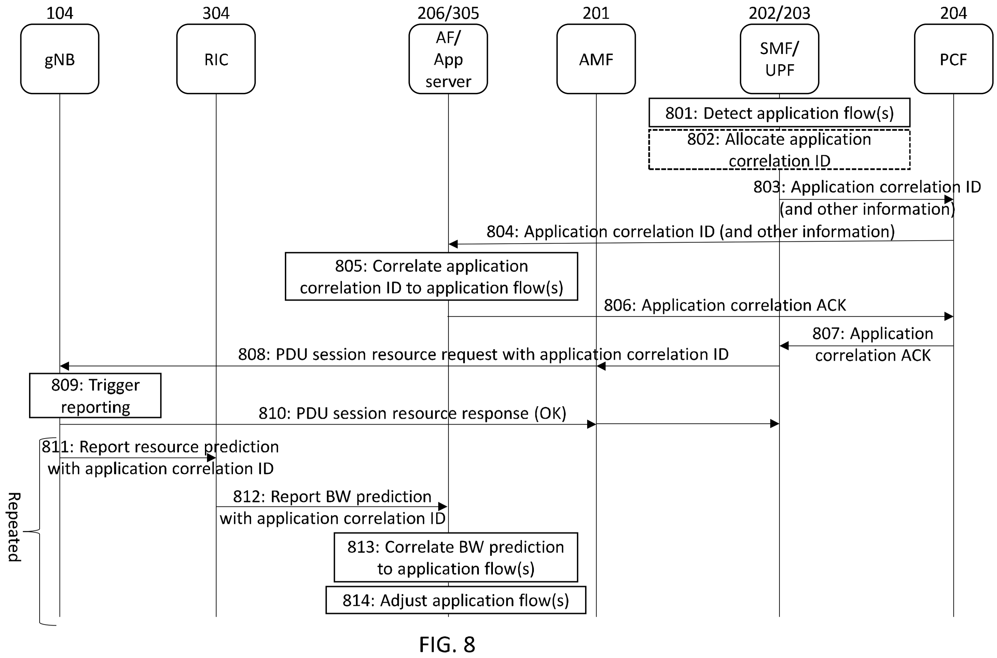

FIG. 8 illustrates a signal flow diagram according to an example embodiment. In this example embodiment, the application correlation identifier may pre-allocated, or it may be allocated by the SMF or UPF at application flow detection.

Referring to FIG. 8, at 801, the SMF 202 or UPF 203 detects one or more application flows. For example, the SMF 202 or UPF 203 may detect the IP address and port number(s) of the application function 206 or application server 305, for example per data network name (DNN) or access point name (APN) configuration. The SMF 202 and/or UPF 203 may comprise collocated PCF functionality that provides the policies for detecting and allocating the application correlation identifier.

For example, the one or more application flows may comprise an extended reality application flow or a media stream, or any other type of application flow.

At 802, the SMF 202 or UPF 203 may optionally allocate an application correlation identifier for the one or more application flows based on the detection (or in response to the detection). Alternatively, the application correlation identifier may be pre-allocated.

The application correlation identifier indicates or identifies at least one of: the one or more application flows served by the application function 206 or application server 305 to a UE 100 via a network node 104, and/or a user connection used for delivering the one or more application flows to the UE 100 via the network node 104. In other words, the application correlation identifier may relate to the one or more applications flows and/or to the user connection (e.g., QoS flow, bearer, RRC connection, PDU session, etc.).

At 803, the SMF 202 or UPF 203 transmits the application correlation identifier (or a message comprising the application correlation identifier) to the PCF 204. The SMF 202 or UPF 203 may transmit the application correlation identifier based on (or in response to) detecting the one or more application flows.

The SMF 202 or UPF 203 may also transmit other information to the PCF 204, such as at least one of: an IP address allocated to the UE 100, a port number associated with the UE 100, an IP address of an application (or application server 305) associated with the one or more application flows, a port number of the application (or application server 305) associated with the one or more application flows, a user identifier of a subscribed user of the UE 100, an identifier of the UE 100, a public land mobile network (PLMN) identifier, or an operator network identifier.

Alternatively, or additionally, the other information may comprise application flow derived information, such as an identifier that is derived or concatenated based on at least one of: the IP address allocated to the UE 100, the port number associated with the UE 100, the IP address of the application (or application server 305), or the port number of the application (or application server 305).

The SMF 202 or UPF 203 may be pre-configured with a correlation configuration (e.g., DNN, 5QI, etc.), based on which the application correlation identifier and/or the other information may be transmitted.

At 804, the PCF 204 transmits, or forwards, the application correlation identifier (or a message comprising the application correlation identifier) to the application function 206 or application server 305. The PCF 204 may also transmit, or forward, the other information to the application function 206 or application server 305.

The PCF 204 may be pre-configured with a correlation configuration (e.g., 5QI, AF information identifying the application function 206 or application server 305, etc.), based on which the application correlation identifier and/or the other information may be forwarded to the application function 206 or application server 305.

The application function 206 or application server 305 receives and saves (or stores) the application correlation identifier and/or the other information (e.g., in an internal memory of the application server 305).

At 805, the application function 206 or application server 305 correlates or maps the application correlation identifier to the one or more application flows. This correlation or mapping may be based on the other information that may be provided together with the application correlation identifier. For example, the IP address(es) and/or port numbers may be used to identify the one or more application flows.

At 806, the application function 206 or application server 305 transmits, to the PCF 204, an acknowledgement (ACK) indicating that the application correlation identifier was successfully received and correlated to the one or more application flows.

At 807, the PCF 204 transmits, or forwards, the acknowledgement to the SMF 202 or UPF 203.

At 808, based on receiving the acknowledgement, the SMF 202 or UPF 203 transmits, to a network node 104 (e.g., a gNB), via the AMF 201, a PDU session resource request together with at least a part of the application correlation identifier and one or more QoS identifiers of one or more QoS flows that are established or modified for the one or more application flows.

The "at least a part of the application correlation identifier" means that the application identifier and the application correlation instance may be provided together or separately (possibly even by separate network entities).

The PDU session resource request is a procedure used in 5G networks to allocate or modify resources for a PDU session. The PDU session is a container for the one or more application flows. This request may be initiated by the SMF 202 or UPF 203 to ensure that the QoS requirements for the PDU session are met.

The PDU session resource request may optionally further comprise at least one of: the user identifier, the identifier of the UE 100 (which may be specific to the application function 206 or application server 305), the IP address allocated to the UE 100, the port number associated with the UE 100, an identifier of at least a subset of a QoS flow associated with the one or more application flows, an identifier of (each of) one or more PDU sets associated with the one or more application flows, or the identifier of the entity or network (e.g., PLMN identifier) that allocated the application correlation identifier.

At 809, based on the received PDU session resource request, the network node 104 triggers reporting of network resource use prediction information, for example per 5QI and the application correlation identifier.

At 810, the network node 104 transmits, to the SMF 202 or UPF 203, via the AMF 201, a PDU session resource response to indicate that the requested resources for the PDU session have been successfully allocated.

At 811, the network node 104 (e.g., gNB) transmits the network resource use prediction information to the near-RT RIC 304 (or to another network entity, e.g., comprised in or collocated with the gNB or application server 305). The network resource use prediction information may be provided on a DRB level (per DRB of the one or more data radio bearers), or PDU set importance level, or a combination of these.

The network resource use prediction information may be transmitted together with the at least part of the application correlation identifier and possibly also at least one of: the user identifier of the subscribed user of the UE 100, the identifier of the UE 100, the IP address allocated to the UE 100, the port number associated with the UE 100, an identifier of (each of) the one or more data radio bearers established for carrying the one or more application flows, the identifier of at least the subset of the QoS flow associated with the one or more application flows, the identifier of (each of) one or more PDU sets associated with the one or more application flows, or the identifier of the entity or the network that allocated the application correlation identifier.

The network node 104 may be pre-configured with a correlation configuration that indicates, for example, the address (e.g., IP address) of the near-RT RIC 304 (or other network entity), and/or a reporting periodicity for transmitting the network resource use prediction information. In other words, the network node 104 may transmit (or report) the network resource use prediction information based on this correlation configuration. The correlation configuration may further comprise, for example, 5QI information.

At 812, based on the received network resource use prediction information, the near-RT RIC 304 (or other network entity) transmits, to the application function 206 or application server 305, a message comprising the at least part of the application correlation identifier and bandwidth prediction information. The bandwidth prediction information may be provided on a DRB level (e.g., one bandwidth prediction per DRB), or PDU set importance level, or a combination of these.

The near-RT RIC 304 (or other network entity) may be pre-configured with a correlation configuration that indicates, for example, the IP address of the application function 206 or application server 305. In other words, the near-RT RIC 304 (or other network entity) may transmit the message based on this correlation configuration. The correlation configuration may further comprise, for example, 5QI and/or bandwidth information.

The message may optionally further comprise at least one of: the user identifier of the subscribed user of the UE 100, the identifier of the UE 100, the IP address allocated to the UE 100, the port number associated with the UE 100, the identifier of (each of) the one or more data radio bearers established for carrying the one or more application flows, the identifier of at least the subset of the QoS flow associated with the one or more application flows, the identifier of (each of) one or more PDU sets associated with the one or more application flows, or the identifier of the entity or the network that allocated the application correlation identifier.

At 813, the application function 206 or application server 305 detects the application correlation identifier and correlates the one or more application flows or the user connection to the bandwidth prediction information, based at least on the application correlation identifier (which was mapped to the one or more application flows at 805).

The correlation may further be based on the at least one of: the user identifier, the identifier of the UE 100, the internet protocol address allocated to the UE 100, the port number associated with the UE 100, the identifier of the one or more data radio bearers, the identifier of at least the subset of the quality of service flow, the identifier of the one or more protocol data unit sets, or the identifier of the entity or the network that allocated the application correlation identifier.

At 814, the application function 206 or application server 305 performs one or more actions for adjusting the one or more application flows or the user connection (in uplink and/or downlink), based on the bandwidth prediction information correlated to the one or more application flows or to the user connection.

The application function 206 or application server 305 may be pre-configured with the identifier (e.g., GPSI) of the UE 100 and/or with the application correlation identifier. Alternatively, these may be provided by the PCF 204.

For example, the one or more actions may comprise adjusting a bit rate of the one or more application flows based on the predicted available capacity of the communication link (i.e., to fit the one or more application flows within the predicted available resources).

The adjustment of the bit rate may comprise reducing the bit rate of the one or more application flows, based on the network resource use information indicating that the available capacity is below a first threshold.

Alternatively, the adjustment of the bit rate may comprise increasing the bit rate of the one or more application flows, based on the network resource use information indicating that the available capacity is above a second threshold (which may be the same as or different than the first threshold).

It should be noted that steps 811 to 814 may be performed repeatedly (e.g., according to a certain periodicity).

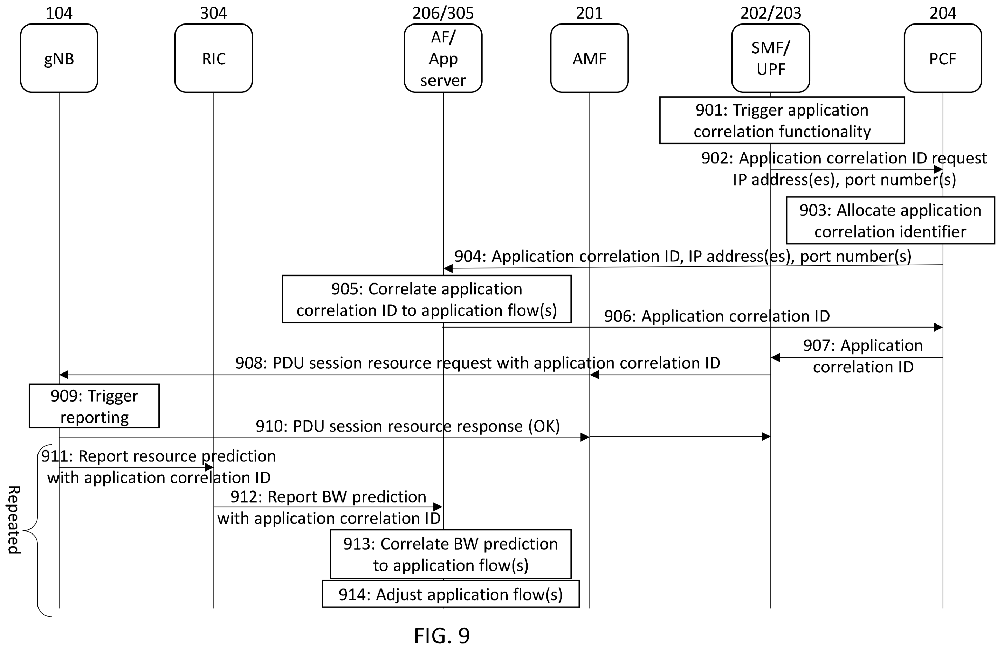

FIG. 9 illustrates a signal flow diagram according to an example embodiment, wherein the application correlation identifier is allocated by the PCF 204 at application flow detection.

Referring to FIG. 9, at 901, the SMF 202 or UPF 203 triggers an application correlation functionality for one or more application flows. For example, the SMF 202 or UPF 203 may trigger this functionality based on (or in response to) detecting the one or more application flows. For example, the SMF 202 or UPF 203 may detect the IP address and port number(s) of the application function 206 or application server 305, for example per data network name (DNN) or access point name (APN) configuration. The SMF 202 and/or UPF 203 may comprise collocated PCF functionality that detects the one or more application flows.

For example, the one or more application flows may comprise an extended reality application flow or a media stream, or any other type of application flow.

At 902, based on the triggering, the SMF 202 or UPF 203 transmits, to the PCF 204, a request for allocating an application correlation identifier for the one or more application flows.

The SMF 202 or UPF 203 may be pre-configured with a correlation configuration (e.g., DNN, 5QI, etc.), based on which the request may be transmitted.

The SMF 202 or UPF 203 may also transmit, to the PCF 204, at least one of: a user identifier of a subscribed user of the UE 100, an identifier of the UE 100, a public land mobile network (PLMN) identifier, an operator network identifier, an IP address allocated to the UE 100, a port number associated with the UE 100, an IP address of an application (or application server 305) associated with the one or more application flows, or a port number of the application (or application server 305) associated with the one or more application flows.

At 903, based on the request, the PCF 204 allocates an application correlation identifier for the one or more application flows.

The application correlation identifier indicates or identifies at least one of: the one or more application flows served by the application function 206 or application server 305 to a UE 100 via a network node 104, and/or a user connection used for delivering the one or more application flows to the UE 100 via the network node 104. In other words, the application correlation identifier may relate to the one or more applications flows and/or to the user connection (e.g., QoS flow, bearer, RRC connection, PDU session, etc.).

At 904, the PCF 204 transmits the application correlation identifier (or a message comprising the application correlation identifier) to the application function 206 or application server 305.

The PCF 204 may also transmit, or forward, to the application function 206 or application server 305, at least one of: the user identifier, the identifier of the UE 100, the PLMN identifier, the operator network identifier, the IP address allocated to the UE 100, the port number associated with the UE 100, the IP address of the application (or application server 305) associated with the one or more application flows, or the port number of the application (or application server 305) associated with the one or more application flows.

The PCF 204 may be pre-configured with a correlation configuration (e.g., 5QI, AF information identifying the application function 206 or application server 305, etc.), based on which the application correlation identifier and/or other information may be transmitted to the application function 206 or application server 305.

The application function 206 or application server 305 receives and saves (or stores) the application correlation identifier (e.g., in an internal memory of the application server 305).

At 905, the application function 206 or application server 305 correlates or maps the application correlation identifier to the one or more application flows. For example, this correlation or mapping may be based on at least one of: the IP address allocated to the UE 100, the port number associated with the UE 100, the IP address of the application (or application server 305) associated with the one or more application flows, or the port number of the application (or application server 305) associated with the one or more application flows. In other words, the IP address(es) and/or port numbers may be used to identify the one or more application flows.

At 906, the application function 206 or application server 305 transmits the application correlation identifier to the PCF 204.

At 907, the PCF 204 transmits, or forwards, the application correlation identifier to the SMF 202 or UPF 203.

At 908, based on receiving the application correlation identifier, the SMF 202 or UPF 203 transmits, to a network node 104 (e.g., a gNB), via the AMF 201, a PDU session resource request together with at least a part of the application correlation identifier and one or more QoS identifiers of one or more QoS flows that are established or modified for the one or more application flows.

The "at least a part of the application correlation identifier" means that the application identifier and the application correlation instance may be provided together or separately (possibly even by separate network entities).

The PDU session resource request is a procedure used in 5G networks to allocate or modify resources for a PDU session. The PDU session is a container for the one or more application flows. This request may be initiated by the SMF 202 or UPF 203 to ensure that the QoS requirements for the PDU session are met.

The PDU session resource request may optionally further comprise at least one of: the user identifier, the identifier of the UE 100 (which may be specific to the application function 206 or application server 305), the IP address allocated to the UE 100, the port number associated with the UE 100, an identifier of at least a subset of a QoS flow associated with the one or more application flows, an identifier of (each of) one or more PDU sets associated with the one or more application flows, or the identifier of the entity or network (e.g., PLMN identifier) that allocated the application correlation identifier.

At 909, based on the received PDU session resource request, the network node 104 triggers reporting of network resource use prediction information, for example per 5QI and the application correlation identifier.

At 910, the network node 104 transmits, to the SMF 202 or UPF 203, via the AMF 201, a PDU session resource response to indicate that the requested resources for the PDU session have been successfully allocated.

At 911, the network node 104 (e.g., gNB) transmits the network resource use prediction information to the near-RT RIC 304 (or to another network entity, e.g., comprised in or collocated with the gNB or application server 305). The network resource use prediction information may be provided on a DRB level (per DRB of the one or more data radio bearers), or PDU set importance level, or a combination of these.

The network resource use prediction information may be transmitted together with the at least part of the application correlation identifier and possibly also at least one of: the user identifier of the subscribed user of the UE 100, the identifier of the UE 100, the IP address allocated to the UE 100, the port number associated with the UE 100, an identifier of (each of) the one or more data radio bearers established for carrying the one or more application flows, the identifier of at least the subset of the QoS flow associated with the one or more application flows, the identifier of (each of) one or more PDU sets associated with the one or more application flows, or the identifier of the entity or the network that allocated the application correlation identifier.

The network node 104 may be pre-configured with a correlation configuration that indicates, for example, the address (e.g., IP address) of the near-RT RIC 304 (or other network entity), and/or a reporting periodicity for transmitting the network resource use prediction information. In other words, the network node 104 may transmit (or report) the network resource use prediction information based on this correlation configuration. The correlation configuration may further comprise, for example, 5QI information.

At 912, based on the received network resource use prediction information, the near-RT RIC 304 (or other network entity) transmits, to the application function 206 or application server 305, a message comprising the at least part of the application correlation identifier and bandwidth prediction information. The bandwidth prediction information may be provided on a DRB level (e.g., one bandwidth prediction per DRB), or PDU set importance level, or a combination of these.

The near-RT RIC 304 (or other network entity) may be pre-configured with a correlation configuration that indicates, for example, the IP address of the application function 206 or application server 305. In other words, the near-RT RIC 304 (or other network entity) may transmit the message based on this correlation configuration. The correlation configuration may further comprise, for example, 5QI and/or bandwidth information.

The message may optionally further comprise at least one of: the user identifier of the subscribed user of the UE 100, the identifier of the UE 100, the IP address allocated to the UE 100, the port number associated with the UE 100, the identifier of (each of) the one or more data radio bearers established for carrying the one or more application flows, the identifier of at least the subset of the QoS flow associated with the one or more application flows, the identifier of (each of) one or more PDU sets associated with the one or more application flows, or the identifier of the entity or the network that allocated the application correlation identifier.

At 913, the application function 206 or application server 305 detects the application correlation identifier and correlates the one or more application flows or the user connection to the bandwidth prediction information, based at least on the application correlation identifier (which was mapped to the one or more application flows at 905).

The correlation may further be based on the at least one of: the user identifier, the identifier of the UE 100, the internet protocol address allocated to the UE 100, the port number associated with the UE 100, the identifier of the one or more data radio bearers, the identifier of at least the subset of the quality of service flow, the identifier of the one or more protocol data unit sets, or the identifier of the entity or the network that allocated the application correlation identifier.

At 914, the application function 206 or application server 305 performs one or more actions for adjusting the one or more application flows or the user connection (in uplink and/or downlink), based on the bandwidth prediction information correlated to the one or more application flows or to the user connection.

The application function 206 or application server 305 may be pre-configured with the identifier (e.g., GPSI) of the UE 100 and/or with the application correlation identifier. Alternatively, these may be provided by the PCF 204.

For example, the one or more actions may comprise adjusting a bit rate of the one or more application flows based on the predicted available capacity of the communication link (i.e., to fit the one or more application flows within the predicted available resources).

The adjustment of the bit rate may comprise reducing the bit rate of the one or more application flows, based on the network resource use information indicating that the available capacity is below a first threshold.

Alternatively, the adjustment of the bit rate may comprise increasing the bit rate of the one or more application flows, based on the network resource use information indicating that the available capacity is above a second threshold (which may be the same as or different than the first threshold).

It should be noted that steps 911 to 914 may be performed repeatedly (e.g., according to a certain periodicity).

Furthermore, it should be noted that the bandwidth prediction information is just one example of information related to the communication link, and the example embodiments are not limited to the bandwidth prediction information.

Alternatively, or additionally, the information related to the communication link may comprise network resource use information indicating network resources used by the UE 100 (i.e., network resources being used currently or used in the past). The network resource use information may also be referred to as radio resource information.

Alternatively, or additionally, the information related to the communication link may comprise connection quality information associated with at least one of: the user connection, a radio network bearer associated with the one more application flows, or a mobile network bearer associated with the one more application flows. As an example, if the connection quality information indicates that the UE 100 is in an area with poor signal quality (e.g., below a configured threshold), the bit rate of the one or more application flows may be reduced to maintain a stable connection.

For example, the connection quality information may comprise measurement results (e.g., measured by the UE 100) for at least one of the following metrics: reference signal received power (RSRP), reference signal received quality (RSRQ), received signal strength indicator (RSSI), signal-to-noise ratio (SNR), signal-to-interference-plus-noise ratio (SINR), modulation and coding scheme (MCS), block error rate (BLER), bit error rate (BER), MIMO rank (e.g., rank 1, rank 2, etc.), hybrid automatic repeat request (HARQ) retransmission related information, latency information, congestion or load information for the user or cell, network slice, etc.

Alternatively, or additionally, the information related to the communication link may comprise location information indicating at least one of: a location of the network node 104, or a location of the UE 100. As an example, if the location information indicates that the UE 100 is moving towards an area with known connectivity issues (e.g., to a rural area), then the one or more application flows or the user connection may be adjusted to mitigate potential problems (e.g., by reducing the bit rate of the one or more application flows).

Alternatively, or additionally, the information may comprise other bit rate resources information from the core network, fixed network, or other access networks.

Furthermore, the adjustment of the bit rate is just one example of an action for adjusting the one or more application flows or the user connection, and the example embodiments are not limited to this action.

Alternatively, or additionally, the one or more actions may comprise terminating at least one of: the user connection, the one or more application flows, a radio network bearer associated with the one or more application flows, or a mobile network bearer associated with the one or more application flows.

Alternatively, or additionally, the one or more actions may comprise transmitting, to the application server 305 or to a core network function (e.g., SMF 202 or UPF 203 or PCF 204) or to the UE 100, one or more transmissions comprising an alert or information for indicating a need to establish, terminate or adjust at least one of: the user connection, the one or more application flows, a radio network bearer (signaling radio bearer) associated with the one or more application flows, or a mobile network bearer associated with the one or more application flows. The one or more transmissions means that the alert or information may be provided one or more times.

Alternatively, or additionally, the one or more actions may comprise changing one or more QoS requirements or a priority level associated with the one or more application flows or the user connection.

A radio network bearer refers to a dedicated channel in mobile communication systems, which is used to carry signaling information between the user equipment and the network. This signaling information may include control messages (e.g., RRC messages) used for establishing, maintaining, and releasing connections. The radio network bearer may also be called a signaling radio bearer.

A mobile network bearer refers to the communication channel or path used to transmit data between the user equipment and the network. The mobile network bearer is a broad term covering all types of communication channels.

Some example embodiments may also be applicable to other networks than mobile networks (e.g., to fixed-access networks).

In some example embodiments, instead of the SMF/UPF or application function 206 (or application server 305), the triggering entity or functionality for the reporting of the information related to the communication link may be, for example: network infrastructure functionality or entity, other core network function, RAN (e.g., network node 104), near-RT RIC 304, user plane functionality, control plane functionality, QoS or policy control functionality, a specific artificial intelligence or machine learning functionality, a deep packet inspection functionality, a specific rendering entity, the UE 100, a media application in the UE 100, or an external functionality (such as rendering-specific functionality, deep packet inspection, an artificial intelligence or machine learning model detecting or identifying the use of media application that can be rendered by a specific application pattern, application related control or other information in application payload or other data payload header).

In some example embodiments, the reporting may be triggered, for example, with: an explicit request by network infrastructure functionality (e.g., bearer control entity, policy control entity, user plane functionality, artificial intelligence or machine learning related entity, deep packet inspection, etc.), an application request (e.g., specific media application always, for certain applications, with specific application related detected or required quality, e.g., low, high, delays detected, etc.), based on static or semi-static configuration in UDM, PCF, UPF and pre-defined conditions being met such as establishment of bearer with specific characteristics (e.g., 5QI, to specific DNN, etc.), dynamic detection of certain and/or with application data characteristic having specific traffic pattern, load conditions/congestion detection in infrastructure or elsewhere, perceived application quality, specific media data rate (e.g., above 10 MHz), application indicating the possibility for rendering, or detection based on combination of specific static, semi-static and dynamic conditions (e.g., as listed above).

Additional information such as DNN/APN, network slice, RAT/frequency selection priority (RFSP), subscriber profile identifier for RAT/frequency priority (SPID), network configuration, etc. may be used to decide to invoke the reporting service.

In some example embodiments, a reporting possibility indication may used to indicate, for example: reporting required (may result in application resources to be denied if rendering cannot be supported), reporting preferred/not preferred, reporting allowed/not allowed, reporting requested, reporting recommended/not recommended, reporting when given conditions are met (e.g., network/radio interface load, media stream exceeding a specific bit rate, etc.), or one or several of the above configured, given as part of application policing information, media application control information.

The data reporting and collection may include, for example, data reported and collected on rendering activation/deactivation, rendered data amount, type, conditions, etc. The data can be used, for example, for statistical purposes, charging, service or resource use enhancements.

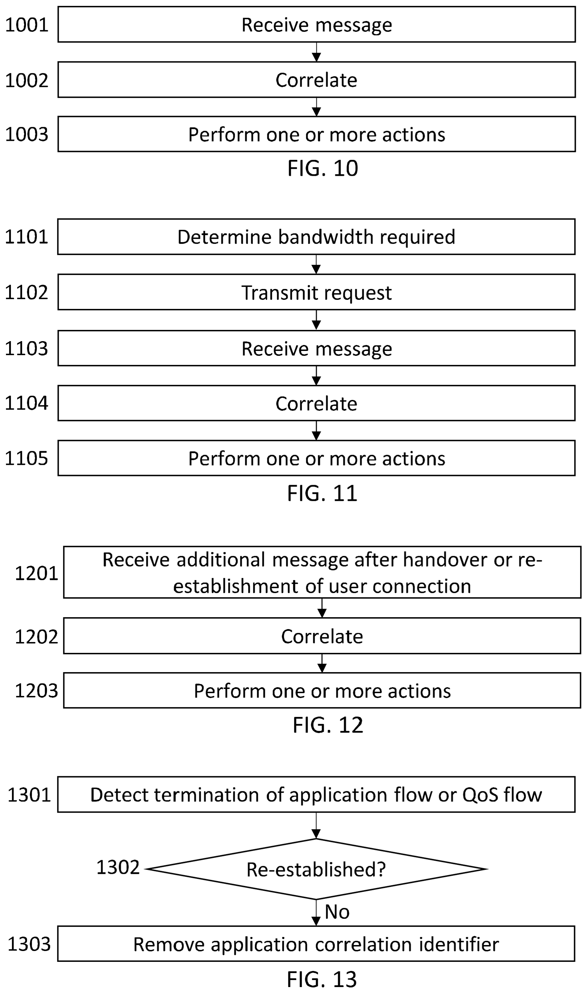

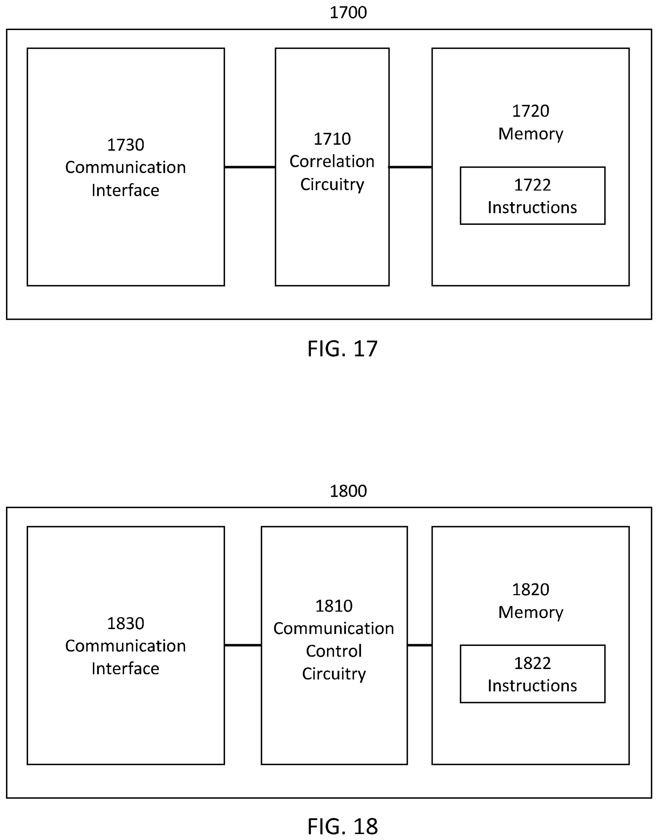

FIG. 10 illustrates a flow chart according to an example embodiment of a method for adjusting one or more application flows or a user connection. The method of FIG. 10 may be performed by an apparatus 1700 depicted in FIG. 17 or by an application function 206. For example, the apparatus 1700 may be, or comprise, or be comprised, an application server 305 or any other computing device.

Referring to FIG. 10, in block 1001, the apparatus 1700 (or application function 206) receives a message comprising information related to a communication link between a network node 104 and a user equipment 100, wherein the message further comprises at least a part of an application correlation identifier indicating at least one of: one or more application flows served to the user equipment 100 via the network node 104, or a user connection used for delivering the one or more application flows to the user equipment 100 via the network node 104. In other words, the application correlation identifier may indicate (or identify) either the one or more application flows or the user connection.

The message may further comprise an indication indicating whether the apparatus 1700 is allowed to adjust the one or more application flows or the user connection based on the information related to the communication link.

The message may be received from a network entity, such as a neal-real-time radio access network intelligent controller 304, or the network node 104 of a radio access network (e.g., a gNB), or a core network function.

In block 1002, the apparatus 1700 (or application function 206) correlates the one or more application flows or the user connection to the information related to the communication link, based at least on the application correlation identifier.

In block 1003, the apparatus 1700 (or application function 206) performs one or more actions for adjusting the one or more application flows or the user connection, based on the information correlated to the one or more application flows or to the user connection.

For example, the information related to the communication link may comprise network resource use information indicating an available capacity of the communication link between the network node and the user equipment. The network resource use information may indicate at least one of: network resources used by the user equipment, or network resources predicted to be used by the user equipment. Herein the network resources may refer to, for example, bandwidth or any other type of network resources.

Alternatively, or additionally, the information related to the communication link may comprise connection quality information associated with at least one of: the user connection, a radio network bearer associated with the one more application flows, or a mobile network bearer associated with the one more application flows.

Alternatively, or additionally, the information related to the communication link may comprise location information indicating at least one of: a location of the network node, or a location of the user equipment.

The one or more actions may comprise, for example, adjusting a bit rate of the one or more application flows based on the information related to the communication link (e.g., based on at least one of: the network resource use information, the connection quality information, and/or the location information). For example, the adjustment of the bit rate may comprise: reducing the bit rate of the one or more application flows, based on the network resource use information indicating that the available capacity is below a first threshold; or increasing the bit rate of the one or more application flows, based on the network resource use information indicating that the available capacity is above a second threshold.

Alternatively, or additionally, the one or more actions may comprise terminating at least one of: the user connection, the one or more application flows, a radio network bearer associated with the one or more application flows, or a mobile network bearer associated with the one or more application flows. For example, the termination may be based on at least one of: the network resource use information, the connection quality information, and/or the location information

Alternatively, or additionally, the one or more actions may comprise transmitting, to an application server or to a core network function or to the user equipment, one or more transmissions comprising an alert or information for indicating a need to establish, terminate or adjust at least one of: the user connection, the one or more application flows, a radio network bearer associated with the one or more application flows, or a mobile network bearer associated with the one or more application flows. For example, the one or more transmissions may be transmitted based on at least one of: the network resource use information, the connection quality information, and/or the location information

Alternatively, or additionally, the one or more actions may comprise changing one or more quality of service requirements or a priority level associated with the one or more application flows or the user connection (e.g., based on at least one of: the network resource use information, the connection quality information, and/or the location information).

The apparatus 1700 may transmit, to a core network function, an indication indicating the one or more actions performed for adjusting the one or more application flows or the user connection.

The core network function may be, for example, a session management function 202, or a user plane function 203, or a policy control function 204.

FIG. 11 illustrates a flow chart according to an example embodiment of a method for adjusting one or more application flows or a user connection. The method of FIG. 11 may be performed by an apparatus 1700 depicted in FIG. 17 or by an application function 206. For example, the apparatus 1700 may be, or comprise, or be comprised, an application server 305 or any other computing device.

Referring to FIG. 11, in block 1101, the apparatus 1700 (or application function 206) determines a bandwidth (or an amount of bandwidth) required by one or more application flows. Each application has specific bandwidth needs based on its functionality. For example, video streaming services require more bandwidth than text messaging application. The apparatus 1700 may, for example, analyze the type of application and its data usage patterns to determine the bandwidth required. As another example, the required bandwidth may be determined based on one or more quality of service requirements of the one or more application flows.

In block 1102, the apparatus 1700 (or application function 206) transmits, to a core network function, a request for the bandwidth (or the amount of bandwidth) required by the one or more application flows, wherein the request comprises an application correlation identifier indicating at least one of: the one or more application flows served to a user equipment 100 via a network node 104, or a user connection used for delivering the one or more application flows to the user equipment 100 via the network node 104.
in block 1103, based on (or in response to) transmitting the request, the apparatus 1700 (or application function 206) receives a message comprising information related to a communication link between the network node 104 and the user equipment 100, wherein the message further comprises at least a part of the application correlation.

The information related to the communication link indicates that the bandwidth (or the amount of bandwidth) required by the one or more application flows is available.

The message may be received from the core network function or from another network entity (e.g., from the neal-real-time radio access network intelligent controller 304 or from the network node 104 of the radio access network).

In block 1104, the apparatus 1700 (or application function 206) correlates the one or more application flows or the user connection to the information related to the communication link, based at least on the application correlation identifier.

In block 1105, the apparatus 1700 (or application function 206) performs one or more actions for adjusting the one or more application flows or the user connection, based on the information correlated to the one or more application flows or to the user connection. Some examples of the one or more actions are described above.

For example, the one or more actions may comprise adjusting the bit rate of the one or more application flows according to the amount of bandwidth indicated to be available in the message.

FIG. 12 illustrates a flow chart according to an example embodiment of a method for adjusting one or more application flows or a user connection. The method of FIG. 12 may be performed by an apparatus 1700 depicted in FIG. 17 or by an application function 206. For example, the apparatus 1700 may be, or comprise, or be comprised, an application server 305 or any other computing device.

The method of FIG. 12 may be performed following the method of FIG. 10 or the method of FIG. 11.

When the UE 100 moves in the mobile network, the correlation is updated from the source side to the target side (e.g., from source cell/gNB to target cell/gNB) with the mobility procedures, and thus the application correlation identifier (or at least a part of it) is provided with the QoS flow from the source side to the target side. The correlation may be re-established with the same or different application server. If a different application server is used, a new correlation identifier may be allocated by the application server or by the core network.

In block 1201, the apparatus 1700 (or application function 206) receives an additional message comprising information related to a communication link between a target network node and the user equipment 100 after a handover of the user equipment 100 from the network node 104 (controlling the source cell of the handover) to the target network node (controlling the target cell of the handover), or after a re-establishment of the user connection of the user equipment 100 from the network node 104 to the target network node.

The additional message further comprises at least a part of the application correlation identifier or at least a part of an updated application correlation identifier. In other words, the application correlation identifier or a part of it may be updated (e.g., a a new application correlation identifier may be allocated to replace the previous application correlation identifier). Alternatively, the already allocated application correlation identifier (the one allocated before the handover or re-establishment) may be used without updating or replacing it.

In block 1202, the apparatus 1700 (or application function 206) correlates the one or more application flows to the information related to the communication link between the target network node and the user equipment 100, based at least on the application correlation identifier or the updated application correlation identifier comprised in the additional message.

In block 1203, the apparatus 1700 (or application function 206) performs one or more actions for adjusting the one or more application flows, based on the information related to the communication link between the target network node and the user equipment 100. Some examples of the one or more actions are described above.

FIG. 13 illustrates a flow chart according to an example embodiment of a method for removing the application correlation identifier. The method of FIG. 13 may be performed by an apparatus 1700 depicted in FIG. 17 or by an application function 206. For example, the apparatus 1700 may be, or comprise, or be comprised, an application server 305 or any other computing device.

The method of FIG. 13 may be performed in addition to or independently of any of the methods of FIGS. 10 to 12.

In block 1301, the apparatus 1700 (or application function 206) detects a termination (or removal) of at least one of: the one or more application flows, or a quality of service flow associated with the one or more application flows.

For example, if no data packets associated with the one or more application flows are received or transmitted for a certain time duration, the apparatus 1700 may infer that the one or more application flows have been terminated.

In block 1302, the apparatus 1700 (or application function 206) determines whether the one or more application flows or the quality of service flow have been re-established within a pre-defined time period after detecting the termination.

In block 1303, based on determining that the one or more application flows or the quality of service flow have not been re-established within the pre-defined time period (block 1302: no), the apparatus 1700 (or application function 206) removes (or deletes) the application correlation identifier that was previously saved or stored (e.g., in the internal memory of the apparatus 1700).

The pre-defined time period may be any time value greater than or equal to zero. In case the time value is zero, then the apparatus 1700 (or application function 206) may remove the application correlation identifier immediately upon detecting the termination (i.e., block 1302 may be skipped).

If the pre-defined time period is greater than zero, then a delay is applied before removing the application correlation identifier to allow a possibility for re-establishing the connection (e.g., in case the RRC connection is only temporarily lost, etc.).

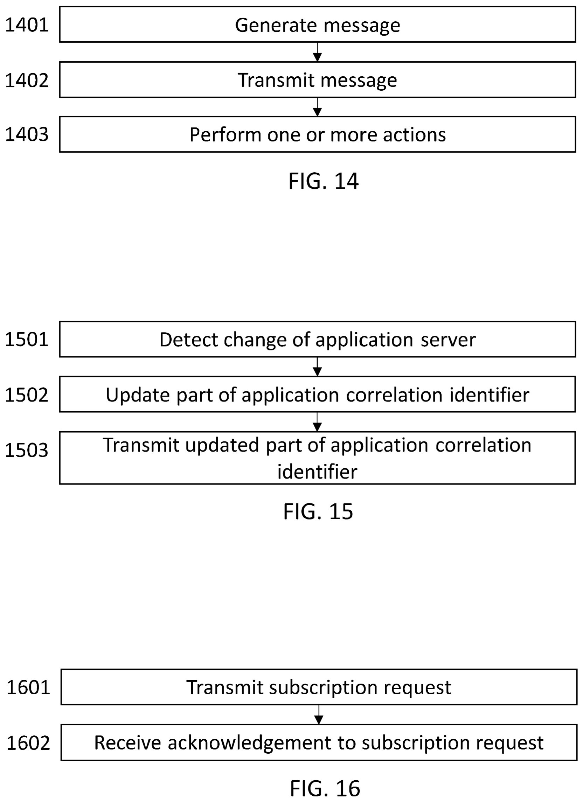

FIG. 14 illustrates a flow chart according to an example embodiment of a method for providing at least a part of an application correlation identifier. The method of FIG. 14 may be performed by an apparatus 1800 depicted in FIG. 18 or by a core network function (e.g., SMF 202 or UPF 203). For example, the apparatus 1800 may be, or comprise, or be comprised in, a network entity, such as a network node 104 (e.g., a gNB) of a radio access network, or a near-real-time radio access network intelligent controller 304, or a core network function (e.g., SMF 202 or UPF 203).

Referring to FIG. 14, in block 1401, the apparatus 1800 (or core network function) generates a message comprising information related to a communication link between a network node 104 and a user equipment 100.

The message further comprises at least one of: at least a part of an application correlation identifier indicating at least one of: one or more application flows served by an application server to the user equipment via the network node, or a user connection used for delivering the one or more application flows to the user equipment via the network node.

The message may further comprise an indication indicating whether the application server is allowed to adjust the one or more application flows or the user connection based on the information related to the communication link. For example, the indication may indicate that the correlation or the adjustment is allowed, or that the correlation or the adjustment is not allowed.

In block 1402, the apparatus 1800 (or core network function) transmits the message to the application server serving the one or more application flows.

FIG. 15 illustrates a flow chart according to an example embodiment of a method for updating at least a part of an application correlation identifier. The method of FIG. 15 may be performed by an apparatus 1800 depicted in FIG. 18 or by a core network function (e.g., SMF 202 or UPF 203). For example, the apparatus 1800 may be, or comprise, or be comprised in, a network entity, such as a network node 104 (e.g., a gNB) of a radio access network, or a near-real-time radio access network intelligent controller 304, or a core network function.

The method of FIG. 15 may be performed following the method of FIG. 14, or independently of the method of FIG. 14.

Referring to FIG. 15, in block 1501, the apparatus 1800 (or core network function) detects a change of the application server to a new application server, wherein the new application server is serving the one or more application flows to the user equipment 100 after the change.

In block 1502, based on detecting the change of the application server, the apparatus 1800 (or core network function) updates the part of the application correlation identifier that identifies the application server to identify the new application server.

In block 1503, the apparatus 1800 (or core network function) transmits at least the updated part of the application correlation identifier (or the entire application correlation identifier after the update) to the new application server or to another network entity.

FIG. 16 illustrates a flow chart according to an example embodiment of a method for subscribing to a correlation service. The method of FIG. 16 may be performed by an apparatus 1700 depicted in FIG. 17, or by an apparatus 1800 depicted in FIG. 18, or by an application function 206, or by a core network function (e.g., SMF 202 or UPF 203).

The method of FIG. 16 may be performed prior to any of the methods of FIGS. 10 to 15.

Referring to FIG. 16, in block 1601, the apparatus 1700 or 1800 transmits, to a core network function (e.g., AUSF 208 or PCF 204 or UDM 205), a subscription request for subscribing to an application correlation service. The application correlation service is a service for using the application correlation identifier to correlate the one or more application flows or the user connection to the information related to the communication link.

In block 1602, the apparatus 1700 or 1800 receives, from the core network function, an acknowledgement to the subscription request, wherein the acknowledgement comprises at least a part of the application correlation identifier.

The blocks, related functions, and information exchanges (messages) described above by means of FIGS. 4 to 16 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 17 illustrates an example of an apparatus 1700 comprising means for performing one or more of the example embodiments (e.g., any of the methods of FIGS. 10 to 13 or FIG. 16, or the functionalities of the AF 206 or application server 305 in FIGS. 4 to 9) described above. For example, the apparatus 1700 may be, or comprise, or be comprised, an application server 305, an application function 206, or any other computing device.

The apparatus 1700 may comprise, for example, a circuitry or a chipset applicable for realizing one or more of the example embodiments described above. The apparatus 1700 may be an electronic device or computing system comprising one or more electronic circuitries. The apparatus 1700 may comprise a correlation circuitry 1710 such as at least one processor, and at least one memory 1720 storing instructions 1722 which, when executed by the at least one processor, cause the apparatus 1700 to carry out one or more of the example embodiments described above. Such instructions 1722 may, for example, include computer program code (software). The at least one processor and the at least one memory storing the instructions may provide the means for providing or causing the performance of any of the methods and/or blocks described above.

In another embodiment, the means may be an application function 206, or the means may be network function virtualization infrastructure.

The processor is coupled to the memory 1720. The processor is configured to read and write data to and from the memory 1720. The memory 1720 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1720 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1720 or, alternatively or additionally, they may be received, by the apparatus, via an electromagnetic carrier signal and/or may be copied from a physical entity such as a computer program product. Execution of the computer readable instructions causes the apparatus 1700 to perform one or more of the functionalities described above.

The memory 1720 may be implemented using any suitable data storage technology, such as semiconductor-based memory devices, flash memory, magnetic memory devices and systems, optical memory devices and systems, fixed memory and/or removable memory.

The apparatus 1700 may further comprise or be connected to a communication interface 1730 comprising hardware and/or software for realizing communication connectivity according to one or more communication protocols. The communication interface 1730 may comprise at least one transmitter (Tx) and at least one receiver (Rx) that may be integrated to the apparatus 1700 or that the apparatus 1700 may be connected to. The communication interface 1730 may provide means for performing some of the blocks and/or functions (e.g., transmitting and receiving) for one or more example embodiments described above. The communication interface 1730 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1730 provides the apparatus with communication capabilities to communicate in the wireless communication network. The communication interface 1730 may, for example, provide a radio, cable or fiber interface to one or more network nodes 104 and/or a near-RT RIC 304 of a radio access network and/or the core network 110.

It is to be noted that the apparatus 1700 may further comprise various components not illustrated in FIG. 17. The various components may be hardware components and/or software components.

FIG. 18 illustrates an example of an apparatus 1800 comprising means for performing one or more of the example embodiments (e.g., any of the methods of FIGS. 14 to 16, or the functionalities of the near-RT RIC 304 in FIGS. 4 to 9) described above. For example, the apparatus 1800 may be, or comprise, or be comprised in, a network entity, such as a network node 104 (e.g., a gNB) of a radio access network, or a near-real-time radio access network intelligent controller 304, or a core network function (e.g., AMF 201, SMF 202, UPF 203, or PCF 204).

The apparatus 1800 may comprise, for example, a circuitry or a chipset applicable for realizing one or more of the example embodiments described above. The apparatus 1800 may be an electronic device comprising one or more electronic circuitries. The apparatus 1800 may comprise a communication control circuitry 1810 such as at least one processor, and at least one memory 1820 storing instructions 1822 which, when executed by the at least one processor, cause the apparatus 1800 to carry out one or more of the example embodiments described above. Such instructions 1822 may, for example, include computer program code (software). The at least one processor and the at least one memory storing the instructions may provide the means for providing or causing the performance of any of the methods and/or blocks described above.

The processor is coupled to the memory 1820. The processor is configured to read and write data to and from the memory 1820. The memory 1820 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1820 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1820 or, alternatively or additionally, they may be received, by the apparatus, via an electromagnetic carrier signal and/or may be copied from a physical entity such as a computer program product. Execution of the computer readable instructions causes the apparatus 1800 to perform one or more of the functionalities described above.

The memory 1820 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 1800 may further comprise or be connected to a communication interface 1830, such as a radio unit, comprising hardware and/or software for realizing communication connectivity with one or more wireless communication devices according to one or more communication protocols. The communication interface 1830 comprises at least one transmitter (Tx) and at least one receiver (Rx) that may be integrated to the apparatus 1800 or that the apparatus 1800 may be connected to. The communication interface 1830 may provide means for performing some of the blocks and/or functions (e.g., transmitting and receiving) for one or more example embodiments described above. The communication interface 1830 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1830 provides the apparatus with communication capabilities to communicate in the wireless communication network. The communication interface may, for example, provide a radio interface to one or more UEs 100, 102. The apparatus 1800 may further comprise or be connected to another interface towards a core network 110, such as the network coordinator apparatus or AMF 201, and/or to network nodes 104 of the wireless communication network.

It is to be noted that the apparatus 1800 may further comprise various components not illustrated in FIG. 18. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus (1700) comprising at least one processor (1710), and at least one memory (1720) storing instructions (1722) that, when executed by the at least one processor (1710), cause the apparatus (1700) at least to:
receive a message comprising information related to a communication link between a network node (104) and a user equipment (100), wherein the information related to the communication link comprises network resource use information indicating an available capacity of the communication link between the network node (104) and the user equipment (100),
wherein the message further comprises at least a part of an application correlation identifier indicating at least one of:
one or more application flows served to the user equipment (100) via the network node (104), or
a user connection used for delivering the one or more application flows to the user equipment (100) via the network node (104);
correlate the one or more application flows or the user connection to the information related to the communication link, based at least on the application correlation identifier; and
perform one or more actions for adjusting the one or more application flows or the user connection, based on the information correlated to the one or more application flows or to the user connection.

2. The apparatus (1700) of claim 1, wherein the one or more actions comprise adjusting a bit rate of the one or more application flows based on the available capacity of the communication link,
wherein the adjustment of the bit rate comprises:
reducing the bit rate of the one or more application flows, based on the network resource use information indicating that the available capacity is below a first threshold; or
increasing the bit rate of the one or more application flows, based on the network resource use information indicating that the available capacity is above a second threshold.

3. The apparatus (1700) of claim 2, wherein the network resource use information indicates at least one of: network resources used by the user equipment (100), or network resources predicted to be used by the user equipment (100).

4. The apparatus (1700) of any preceding claim, wherein the information related to the communication link comprises connection quality information associated with at least one of:
the user connection,
a radio network bearer associated with the one more application flows, or
a mobile network bearer associated with the one more application flows.

5. The apparatus (1700) of any preceding claim, wherein the information related to the communication link comprises location information indicating at least one of: a location of the network node (104), or a location of the user equipment (100).

6. The apparatus (1700) of any preceding claim, wherein the one or more actions comprise terminating at least one of:
the user connection,
the one or more application flows,
a radio network bearer associated with the one or more application flows, or
a mobile network bearer associated with the one or more application flows.

7. The apparatus (1700) of any preceding claim, wherein the one or more actions comprise transmitting, to an application server (305) or to a core network function (202, 203, 204) or to the user equipment (100), one or more transmissions comprising an alert or information for indicating a need to establish, terminate or adjust at least one of:
the user connection,
the one or more application flows,
a radio network bearer associated with the one or more application flows, or
a mobile network bearer associated with the one or more application flows.

8. The apparatus (1700) of any preceding claim, wherein the one or more actions comprise changing one or more quality of service requirements or a priority level associated with the one or more application flows or the user connection.

9. The apparatus (1700) of any preceding claim, further being caused to:
transmit, to a core network function (202, 203, 204), an indication indicating the one or more actions performed for adjusting the one or more application flows or the user connection.

10. An apparatus (1800) comprising at least one processor (1810), and at least one memory (1820) storing instructions (1822) that, when executed by the at least one processor (1810), cause the apparatus (1800) at least to:
generate a message comprising information related to a communication link between a network node (104) and a user equipment (100), wherein the information related to the communication link comprises network resource use information indicating an available capacity of the communication link between the network node (104) and the user equipment (100),
wherein the message further comprises at least a part of an application correlation identifier indicating at least one of:
one or more application flows served by an application server (305) to the user equipment (100) via the network node (104), or
a user connection used for delivering the one or more application flows to the user equipment (100) via the network node (104); and
transmit the message to the application server (305) serving the one or more application flows.

11. A method comprising:
receiving (509, 709, 812, 912, 1001, 1103) a message comprising information related to a communication link between a network node (104) and a user equipment (100), wherein the information related to the communication link comprises network resource use information indicating an available capacity of the communication link between the network node (104) and the user equipment (100),
wherein the message further comprises at least a part of an application correlation identifier indicating at least one of:
one or more application flows served to the user equipment (100) via the network node (104), or
a user connection used for delivering the one or more application flows to the user equipment (100) via the network node (104);
correlating (510, 710, 813, 913, 1002, 1104) the one or more application flows or the user connection to the information related to the communication link, based at least on the application correlation identifier; and
performing (511, 711, 814, 914, 1003, 1105) one or more actions for adjusting the one or more application flows or the user connection, based on the information correlated to the one or more application flows or to the user connection.

12. A method comprising:
generating (1401) a message comprising information related to a communication link between a network node (104) and a user equipment (100), wherein the information related to the communication link comprises network resource use information indicating an available capacity of the communication link between the network node (104) and the user equipment (100),
wherein the message further comprises at least a part of an application correlation identifier indicating at least one of:
one or more application flows served by an application server (305) to the user equipment (100) via the network node (104), or
a user connection used for delivering the one or more application flows to the user equipment (100) via the network node (104); and
transmitting (509, 709, 812, 912, 1402) the message to the application server (305) serving the one or more application flows.

13. A non-transitory computer readable medium comprising program instructions which, when executed by an apparatus (1700), cause the apparatus (1700) to perform at least the following:
receiving a message comprising information related to a communication link between a network node (104) and a user equipment (100), wherein the information related to the communication link comprises network resource use information indicating an available capacity of the communication link between the network node (104) and the user equipment (100),
wherein the message further comprises at least a part of an application correlation identifier indicating at least one of:
one or more application flows served to the user equipment (100) via the network node (104), or
a user connection used for delivering the one or more application flows to the user equipment (100) via the network node (104);
correlating the one or more application flows or the user connection to the information related to the communication link, based at least on the application correlation identifier; and
performing one or more actions for adjusting the one or more application flows or the user connection, based on the information correlated to the one or more application flows or to the user connection.

14. A non-transitory computer readable medium comprising program instructions which, when executed by an apparatus (1800), cause the apparatus (1800) to perform at least the following:
generating a message comprising information related to a communication link between a network node (104) and a user equipment (100), wherein the information related to the communication link comprises network resource use information indicating an available capacity of the communication link between the network node (104) and the user equipment (100),
wherein the message further comprises at least a part of an application correlation identifier indicating at least one of:
one or more application flows served by an application server (305) to the user equipment (100) via the network node (104), or
a user connection used for delivering the one or more application flows to the user equipment (100) via the network node (104); and
transmitting the message to the application server (305) serving the one or more application flows.

15. A system comprising at least a network entity (304) and an application server (305);
wherein the network entity (304) is configured to:
generate a message comprising information related to a communication link between a network node (104) and a user equipment (100), wherein the information related to the communication link comprises network resource use information indicating an available capacity of the communication link between the network node (104) and the user equipment (100),
wherein the message further comprises at least a part of an application correlation identifier indicating at least one of:
one or more application flows served by the application server (305) to the user equipment (100) via the network node (104), or
a user connection used for delivering the one or more application flows to the user equipment (100) via the network node (104); and
transmit the message to the application server (305) serving the one or more application flows;
wherein the application server (305) is configured to:
receive the message;
correlate the one or more application flows or the user connection to the information related to the communication link, based at least on the application correlation identifier; and
perform one or more actions for adjusting the one or more application flows or the user connection, based on the information correlated to the one or more application flows or to the user connection.
